# EUROPÄISCHE PATENTANMELDUNG

(11) **EP 4 079 574 A1**
(43) Veröffentlichungstag der Anmeldung: **26.10.2022**
(21) Anmeldenummer: 21169649.7
(22) Anmeldetag: 21.04.2021
(51) Int. Cl.: B60Q 1/00, B60Q 1/28, B60Q 1/30

(54) **VERFAHREN ZUR AKTIVIERUNG EINER LICHTFUNKTION EINES AM RUHENDEN VERKEHR TEILNEHMENDEN FAHRZEUGS SOWIE ELEMENT ZUR DURCHFÜHRUNG EINES SOLCHEN VERFAHRENS**

(71) Anmelder: odelo GmbH, 70329 Stuttgart (DE)
(72) Erfinder: VOLLMER, Marco, 73728 Esslingen am Neckar (DE); WILD, Julian, 70327 Stuttgart (DE); HORNUNG, Thorsten, 73760 Ostfildern (DE); BRÄUNLING, Lisa, 70372 Stuttgart (DE); KARLOVIC, Kristian, 73529 Schwäbisch Gmünd (DE)
(74) Vertreter: Benninger, Johannes

(57) **Zusammenfassung**

Es wird ein Verfahren zur Aktivierung einer Lichtfunktion an einem am ruhenden Verkehr teilnehmenden Fahrzeug beschrieben.

Das Verfahren zeichnet sich dadurch aus, dass die Aktivierung eine softwarebasierte Auswertung verschiedener sensorisch erfassbarer Randbedingungen voraussetzt. Das Verfahren sieht vor, ein Ausgangssignal eines Sensors dauerhaft oder in wiederkehrenden Zeitabschnitten zu überwachen und mit einem Schwellenwert zu vergleichen und nur bei einer Überschreitung des Schwellenwerts diesen einen Sensorsignals einen Entscheidungszyklus unter Heranziehung der softwarebasierten Auswertung zu starten, an dessen Ende eine Entscheidung stattfindet, ob die Lichtfunktion eingeschaltet wird, oder ausgeschaltet bleibt, so dass die softwarebasierte Auswertung nur dann ausgeführt wird, wenn eine Aktivierung der Lichtfunktion zumindest wahrscheinlich ist. Die softwarebasierte Auswertung wird am Ende des Entscheidungszyklusses wieder abgeschaltet. Die softwarebasierte Auswertung bleibt so lange abgeschaltet, bis wieder eine Überschreitung des Schwellenwerts durch den Sensorwert vorliegt. Darüber hinaus wird ein Element zur zumindest teilweisen Ausführung eines Verfahrens beschrieben. Das Element umfasst:
- mindestens einen Sensor zur Erfassung einer Einwirkung eines Umwelteinflusses auf den Sensor,
- Mittel zum Vergleich eines der Einwirkung des Umwelteinflusses auf den Sensor proportionalen Ausgangssignals des Sensors mit einem Schwellenwert,
- Mittel zur Aufweckung einer softwarebasierten Auswertung eines oder mehrerer Sensorwerte zum Erhalt eines Entscheidungszyklusses, an dessen Ende eine Entscheidung stattfindet, ob eine Lichtfunktion eingeschaltet wird, oder ausgeschaltet bleibt, welche Mittel zur Aufweckung nur dann betätigt werden, wenn die Mittel zum Vergleich einen Sensorwert höher als der Schwellenwert ermittelt haben, und
- Mittel zur Durchführung der softwarebasierten Auswertung, sowie
- Mittel zur Aktivierung der Lichtfunktion, wenn am Ende der softwarebasierten Auswertung eine Entscheidung zum Einschalten der Lichtfunktion fällt.

## Beschreibung

Die Erfindung betrifft ein Verfahren zur Aktivierung einer Lichtfunktion an einem am ruhenden Verkehr teilnehmenden Fahrzeug gemäß dem Oberbegriff des Anspruchs 1 sowie ein Element zur Durchführung zumindest eines Teils eines solchen Verfahrens gemäß dem Oberbegriff des Anspruchs 6.

Insbesondere beschäftigt sich die Erfindung mit einer Verbesserung der Sicht- und Wahrnehmbarkeit von Fahrzeugen, insbesondere von zur Teilnahme am Straßenverkehr vorgesehenen Fahrzeugen, die momentan nicht am fließenden Verkehr, sondern stattdessen - insbesondere bei Nacht - zumindest zeitweilig am ruhenden Verkehr teilnehmen.

Zur Sichtbarmachung von am Straßenverkehr teilnehmenden oder zur Teilnahme am Straßenverkehr vorgesehenen Fahrzeugen bei Nacht sind am Fahrzeug angeordnete Fahrzeugleuchten bekannt, welche jeweils eine oder mehrere bei der Teilnahme am Straßenverkehr gesetzlich vorgeschriebene Lichtfunktionen zu erfüllen in der Lage sind.

Eine beispielsweise einen von einem Leuchtengehäuse mit mindestens einer von wenigstens einer Lichtscheibe verschlossenen Lichtöffnung und von der Lichtscheibe zumindest zum Teil umschlossenen Leuchteninnenraum umfassende Fahrzeugleuchte, welcher Leuchteninnenraum ein oder mehrere zur Erfüllung zumindest einer Lichtfunktion vorgesehene Leuchtmittel mit jeweils mindestens einer Lichtquelle beherbergt, erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schluss- oder Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, beispielsweise zur Fahrtrichtungsanzeige, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central High-Mounted Braking Lights oder Central High Mounted Stop Lamps, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Um auch bei abgestelltem, am ruhenden Verkehr teilnehmendem Fahrzeug dieses für andere Verkehrsteilnehmer bei Nacht besser erkennbar zu machen ist eine von den außen am Fahrzeug verbauten Fahrzeugleuchten verwirklichbare Parklichtfunktion bekannt, die beim Abstellen eines Fahrzeugs eingestellt werden kann. Die Parklichtfunktion wird jedoch nur sehr selten genutzt, einerseits, weil deren Aktivierung eine Schalter- und/oder Hebeleinstellung voraussetzt, die den meisten Fahrzeuglenkern wenig oder gar nicht vertraut ist, und andererseits, weil insbesondere in der dunklen Jahreszeit - dann wenn die Parklichtfunktion besonders zur Steigerung der Verkehrssicherheit beitragen würde - der mit ihr einhergehende Stromverbrauch den begrenzten Energievorrat der Bordbatterie aufzuzehren drohen könnte.

Um auch bei nicht eingeschalteter Parklichtfunktion ein abgestelltes, am ruhenden Verkehr teilnehmendes Fahrzeug für andere Verkehrsteilnehmer bei Nacht besser erkennbar zu machen sind Rückstrahler und/oder retroreflektierende Reflektoren - kurz Retro-Reflektoren - bekannt. Diese sind zur Verbesserung der Erkennung von am Straßenverkehr, insbesondere am ruhenden Straßenverkehr teilnehmenden Fahrzeugen bei Nacht, gesetzlich vorgeschrieben.

Rückstrahler haben neben einer sehr aufwändigen Herstellung den Nachteil einer nur eingeschränkten Rückstrahlung desjenigen Lichts, mit denen sie angestrahlt werden. Auch ist der Raumwinkelbereich, in dem sie das Licht zu der Lichtquelle, von der sie angestrahlt werden, mit brauchbarer Intensität zurückstrahlen, stark eingeschränkt.

So stellt es sich als nachteilig heraus, dass der lichttechnische Akzeptanzwinkel der Rückstrahler relativ gering ist und dadurch die Effizienz der Rückstrahlwirkung mit einer Abweichung zum senkrechten Lichteinfall auf den Retro-Reflektor stark zurückgeht.

Ein zusätzlicher Nachteil bekannter, beispielsweise in die Lichtscheibe einer Fahrzeugleuchte integrierter Rückstrahler ist die mit ihrer Anwesenheit einhergehende Beschränkung der für die von der Fahrzeugleuchte zu erfüllenden Lichtfunktionen zur Verfügung stehenden Lichtdurchtrittsfläche durch die Lichtscheibe. Dies sei besonders erwähnt, da länderspezifisch für bestimmte Lichtfunktionen zusätzlich zu den voranstehenden Ausführungen Mindestleuchtflächenanforderungen gelten. In Verbindung mit von Rückstrahlern eingenommenen Flächen in einer Lichtscheibe führt dies zu einem erhöhten Bauraumbedarf, einhergehend mit entsprechendem Leuchtenvolumen und - gewicht.

Um die genannten Nachteile eines Rückstrahlers zu vermeiden, ist der Einsatz einer auch als Aktiver Rückstrahler, im Nachfolgenden kurz AR, bezeichneten Fahrzeugleuchte mit aktiver Rückstrahllichtfunktion erstrebenswert. Eine solche Fahrzeugleuchte ist mit mindestens einem Leuchtmittel zur Erfüllung wenigstens einer Lichtfunktion ausgestattet. Hierbei handelt es sich zumindest um die aktive Rückstrahllichtfunktion. Die Fahrzeugleuchte ist mit Empfangsmitteln für auf die Fahrzeugleuchte von einer äußeren Lichtquelle auf die Fahrzeugleuchte gerichteten Lichts ausgestattet.

Die Empfangsmittel können vorteilhaft in der Lage sein, zumindest die Richtung zu erfassen, aus welcher Licht von einer äußeren Lichtquelle ausgehend auf die Fahrzeugleuchte gerichtet ist. Die Empfangsmittel sind demnach bevorzugt in der Lage zumindest die Richtung zu erfassen, in welcher Richtung sich die Lichtquelle befindet, von der aus Licht auf die Fahrzeugleuchte gerichtet ist.

Die Fahrzeugleuchte umfasst zudem mit den Empfangsmitteln verbundenen Betätigungsmitteln zur Aktivierung wenigstens eines zur Erfüllung einer Lichtfunktion vorgesehenen Leuchtmittels.

Die Betätigungsmittel aktivieren das oder die Leuchtmittel in Abhängigkeit davon, ob die Fahrzeugleuchte angestrahlt wird, oder nicht.

Vorzugsweise erfolgt die Lichtabstrahlung der aktiven Rückstrahllichtfunktion zumindest in derjenigen Richtung, in welcher Richtung sich die Lichtquelle befindet, von der aus Licht auf die Fahrzeugleuchte gerichtet ist. Zusätzlich kann jedoch die Lichtabstrahlung der aktiven Rückstrahllichtfunktion auch in eine von derjenigen Richtung, in welcher Richtung sich die Lichtquelle befindet, von der aus Licht auf die Fahrzeugleuchte gerichtet ist, abweichende Richtung erfolgen.

Dabei ist im Vergleich zu einem passiven Rückstrahler ein Aufblinken zur Steigerung der Aufmerksamkeit generell möglich.

Denkbar ist darüber hinaus eine Alarmfunktion, welche bei Annäherung eines Objekts an die Rückstrahlerleuchte beispielsweise mit unverminderter Geschwindigkeit und/oder beispielsweise ab einer vorgebbaren Entfernung beispielsweise beginnt zu blinken oder hell aufzublitzen.

Die vorliegende Erfindung beschäftigt sich mit einem Verfahren zur Aktivierung einer solchen aktiven Rückstrahllichtfunktion.

Um eine Verwirklichung einer aktiven Rückstrahllichtfunktion auch über einen längeren Zeitraum hinweg zu ermöglichen, über den ein Fahrzeug nicht am Straßenverkehr teilnimmt und abgestellt ist, ist es notwendig, dass die Erfassung eines die Aktivierung der Rückstrahllichtfunktion steuernden Signals einen kleinstmöglichen Energieverbrauch aufweist.

Eine Aufgabe der Erfindung ist es, ein Verfahren zur Aktivierung einer Lichtfunktion an einem am ruhenden Verkehr teilnehmenden Fahrzeug sowie ein Element zur Durchführung zumindest eines Teils eines solchen Verfahrens zu entwickeln, eine Umsetzung welchen Verfahrens einen geringen Energieverbrauch aufweist.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein erster Gegenstand der Erfindung betrifft demnach ein Verfahren zur Aktivierung einer Lichtfunktion, insbesondere einer aktiven Rückstrahllichtfunktion, an einem am ruhenden Verkehr teilnehmenden Fahrzeug. Die Aktivierung setzt eine softwarebasierte Auswertung verschiedener sensorisch erfassbarer Randbedingungen voraus. Das Verfahren sieht vor, ein Ausgangssignal eines Sensors dauerhaft oder in wiederkehrenden Zeitabschnitten zu überwachen und mit einem Schwellenwert zu vergleichen. Ferner sieht das Verfahren vor, nur bei einer Überschreitung des Schwellenwerts diesen einen Sensorsignals einen Entscheidungszyklus unter Heranziehung der softwarebasierten Auswertung zu starten. Am Ende des Entscheidungszyklus findet eine Entscheidung statt, ob die aktive Rückstrahllichtfunktion eingeschaltet wird, oder ausgeschaltet bleibt. Somit wird die softwarebasierte Auswertung nur dann ausgeführt, wenn eine Aktivierung der Rückstrahllichtfunktion zumindest wahrscheinlich ist. Die softwarebasierte Auswertung am Ende des Entscheidungszyklusses wird wieder abgeschaltet und sie bleibt so lange abgeschaltet, bis wieder eine Überschreitung des Schwellenwerts durch den Sensorwert vorliegt.

Dabei kann die Aktivierung der beispielsweise als aktive Rückstrahllichtfunktion und/oder aktive Parklichtfunktion ausgeführten Lichtfunktion nach einer vorgebbaren Zeitspanne wieder rückgängig gemacht werden.

Weil eine Lichtfunktion, wie etwa eine aktive Rückstrahllichtfunktion, bei deren Aktivierung im abgestellten Fahrzeug nur begrenzt vorhandene Energie verbraucht, ist eine vorzugsweise softwarebasierte Auswertung verschiedener Randbedingungen notwendig, um zu entscheiden, ob die Lichtfunktion aktiviert wird, oder nicht.

Da jedoch insbesondere eine softwarebasierte Auswertung verschiedener Randbedingungen einen nicht unerheblichen Energieverbrauch nach sich zieht, soll diese nur dann ausgeführt werden, wenn eine mögliche Aktivierung der Lichtfunktion zumindest wahrscheinlich ist.

Damit eine softwarebasierte Auswertung verschiedener Randbedingungen nur dann erfolgt, wenn eine mögliche Aktivierung der Lichtfunktion zumindest wahrscheinlich ist, sieht die Erfindung vor, einen Sensorwert permanent oder in wiederkehrenden, periodischen Zyklen zu erfassen und mit einem vorgegebenen Schwellenwert zu vergleichen. Erst wenn der Sensorwert den Schwellenwert übersteigt, wird eine softwarebasierte Auswertung verschiedener durch Sensoren überwachter und/oder erfassbarer Randbedingungen gestartet, an deren Ende eine Entscheidung stattfindet, ob die Lichtfunktion eingeschaltet wird, oder ausgeschaltet bleibt.

Am Ende eines solchen Entscheidungszyklusses wird die softwarebasierte Auswertung wieder abgeschaltet und verbleibt so lange abgeschaltet, bis wieder eine Überschreitung des Schwellenwerts durch den Sensorwert vorliegt.

Es ist ersichtlich, dass das Verfahren insbesondere zur stromsparenden Filterung von Eingangssignalen zur Erzeugung von validen Ausgangssignalen für die Aktivierung einer Lichtfunktion geeignet ist.

Gegenüber dem Stand der Technik, aus dem die Aktivierung einer Funktion bei Überschreitung eines Sensorwerts grundsätzlich vorbekannt ist, ist demnach vorgesehen, ein Verfahren zur Auswertung einer Erfüllung verschiedener Randbedingungen, deren Vorliegen die Aktivierung einer aktiven Rückstrahllichtfunktion voraussetzt, erst dann zu starten, wenn ein bestimmter Sensorwert einen vorgegebenen Schwellenwert überschreitet, wobei der den Sensorwert gebende Sensor und der Schwellenwert so ausgewählt sind, dass bei Vorliegen einer Überschreitung des Schwellenwerts durch den Sensorwert das Verfahren zur Auswertung einer Erfüllung verschiedener Randbedingungen, deren Vorliegen die Aktivierung einer aktiven Rückstrahllichtfunktion voraussetzt, mit hoher Wahrscheinlichkeit zum Ergebnis einer Aktivierung der aktiven Rückstrahllichtfunktion kommt.

Das Verfahren kann einzelne oder eine Kombination mehrerer zuvor und/oder nachfolgend in Verbindung mit einer Fahrzeugleuchte mit aktiver Rückstrahllichtfunktion und/oder dem AR und/oder kurz als AP bezeichneten Aktiven Parklicht - einer Fahrzeugleuchte mit aktiver Parklichtfunktion - beschriebene Merkmale aufweisen und/oder verwirklichen.

Das Verfahren kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Ein zweiter Gegenstand der Erfindung betrifft ein Element zur Durchführung zumindest eines Teils eines solchen Verfahrens.

Das Element umfasst einen Sensor zur Erfassung einer Einwirkung eines Umwelteinflusses auf den Sensor. Der Sensor ist für mindestens eine beispielsweise physikalische Eigenschaft des Umwelteinflusses empfindlich.

Ferner Umfasst das Element Mittel zum Vergleich eines kurz auch als Sensorwert bezeichneten Wert und/oder Stärke und/oder Höhe eines kurz auch als Sensorsignal bezeichneten, der Einwirkung des Umwelteinflusses auf den Sensor proportionalen Ausgangssignals des Sensors mit einem Schwellenwert.

Darüber hinaus umfasst das Element Mittel zur Aufweckung einer softwarebasierten Auswertung eines oder mehrerer Sensorwerte zum Erhalt eines Entscheidungszyklusses, an dessen Ende eine Entscheidung stattfindet, ob eine Lichtfunktion, beispielsweise eine aktive Rückstrahllichtfunktion, eingeschaltet wird, oder ausgeschaltet bleibt.

Damit die Aufweckung nicht ständig erfolgt, umfasst das Element Mittel, die veranlassen, dass die Mittel zur Aufweckung der softwarebasierten Auswertung nur dann betätigt werden, wenn die Mittel zum Vergleich einen Sensorwert höher als der Schwellenwert ermittelt haben.

Ferner umfasst das Element bevorzugt Mittel zur Durchführung der softwarebasierten Auswertung, sowie Mittel zur Aktivierung der Lichtfunktion, wenn am Ende der softwarebasierten Auswertung eine Entscheidung zum Einschalten der Lichtfunktion fällt.

Vorteilhaft kann das Element weitere Mittel umfassen, die beispielsweise die Mittel zum Vergleich nur dann aktivieren, wenn ein Einschalten der Lichtfunktion in Frage kommt. Solche Mittel können eine Erfassung eines Betriebszustands eines Fahrzeugs und/oder einer Tages und/oder Nachtzeit umfassen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

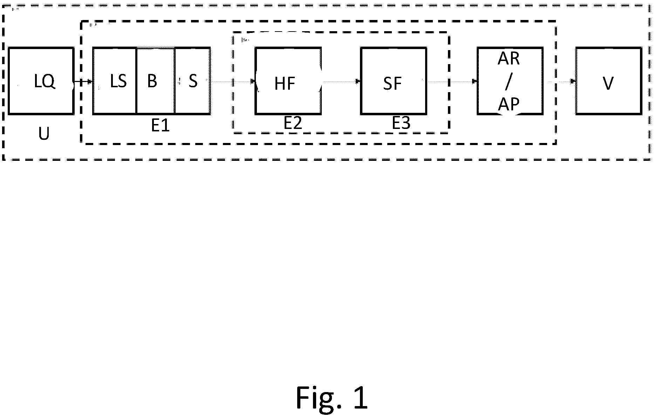

- Fig. 1: eine schematische Darstellung einer Umsetzung des Verfahrens, umfassend verschiedene Ebenen der Filterung. Dabei handelt es sich um die folgenden Ebenen: E1: mechanisch und/oder optisch, E2: Mikrocontroller Peripherie, E3: Mikrocontroller Software.

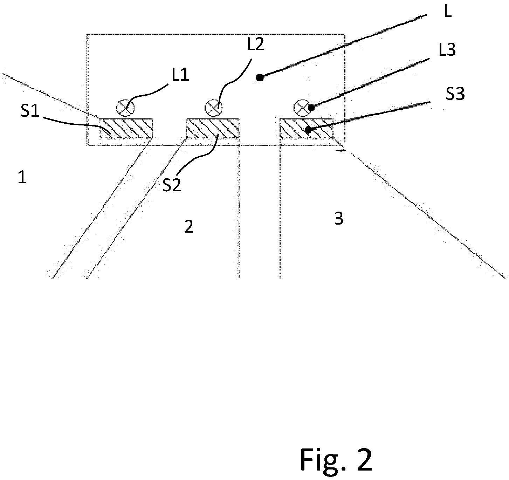

- Fig. 2: eine schematische Darstellung einer segmentweisen Ansteuerung von Lichtfunktionen.

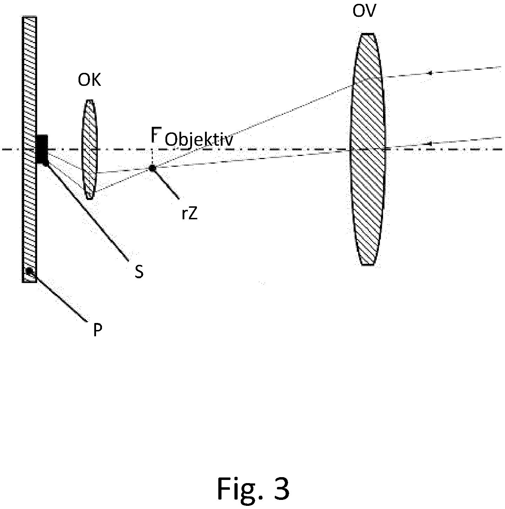

- Fig. 3: eine Erläuterung eines ersten Ausführungsbeispiels eines Aufbaus eines mechanisch optischen Filters für die erste Ebene E1 anhand eines Aufbaus eines Linsenfernrohrs in einer Ausführung als astronomisches Fernrohr in einem Längsschnitt. Ein solches dient einem Sammeln und Bündeln von Strahlung zur Einstellung des Akzeptanzwinkels und für höhere Strahlungsintensität auf dem Sensor.

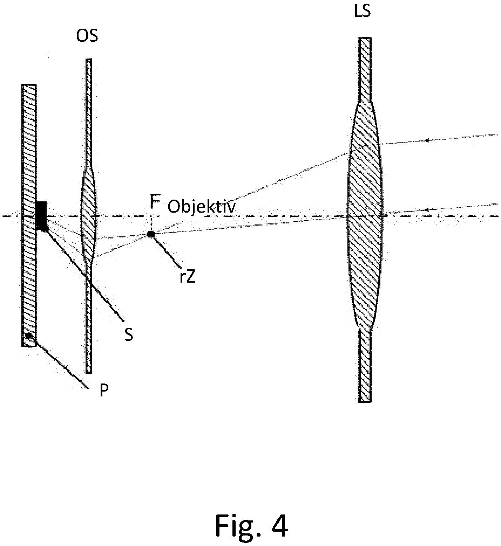

- Fig. 4: eine Erläuterung des ersten Ausführungsbeispiels des Aufbaus eines mechanisch optischen Filters für die erste Ebene E1 anhand eines in eine Leuchte integrierten Aufbaus eines Linsenfernrohrs in einer Ausführung als astronomisches Fernrohr gemäß Fig. 3 mit deren Lichtscheibe als Objektiv und deren Optikscheibe als Okular in einem Längsschnitt.

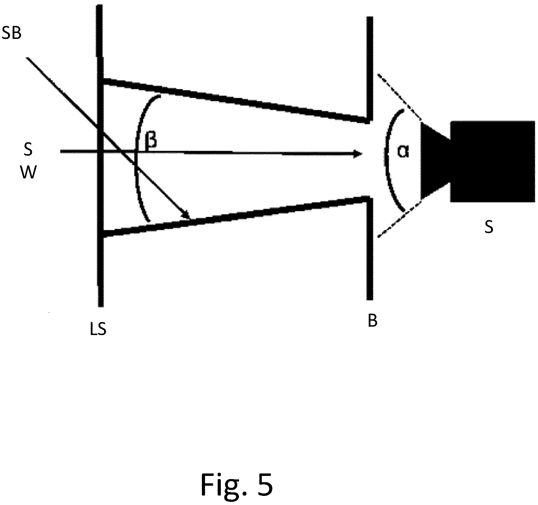

- Fig. 5: ein zweites Ausführungsbeispiel eines Aufbaus eines mechanisch optischen Filters mit einer Lichtscheibe als optisches wellenlängenselektives Filter, einer Blende als Akzeptanzfilter, und einem Sensor als Optik- und Akzeptanzfilter in einem Längsschnitt. Der Akzeptanzwinkel ist dabei derart ausgelegt, dass beispielsweise Scheinwerferlicht auf den Sensor trifft, Störeinflüsse wie eine Straßenbeleuchtung jedoch ausgeblendet werden.

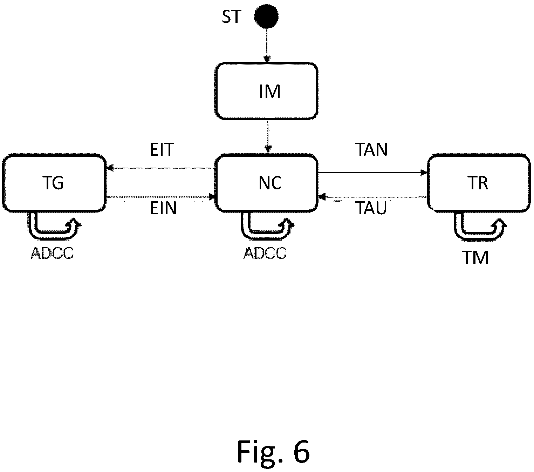

- Fig. 6: ein Zustandsdiagramm eines Ausführungsbeispiels einer Verwirklichung einer verfahrensgemäßen Filterung in der zweiten Ebene E2. Nach erfolgter Initialisierung des Mikrocontrollers kann lediglich aus dem Modus Nacht heraus ein Trigger und somit ein Ausgangssignal erzeugt werden. Von Zustand Tag kann nur in Zustand Nacht gewechselt werden. Eine ADCC erfolgt nach wie vor in Peripherie bei Tag, Nacht und gegebenenfalls auch während des Zustandes Trigger, selbst wenn sich der Mikrocontroller jeweils im Ruhezustand befindet.

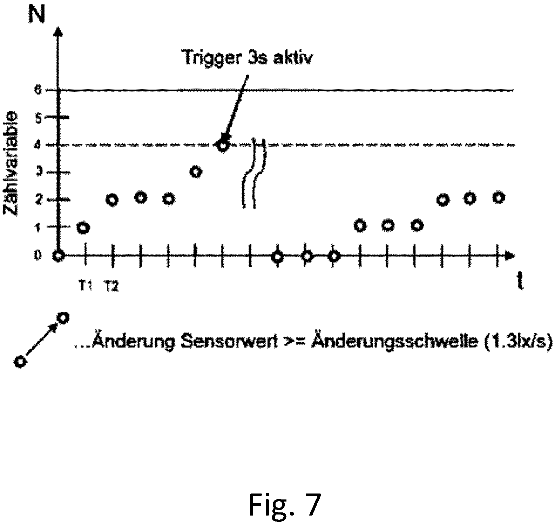

- Fig. 7: ein zeitlicher Verlauf der Funktionsweise eines Softwarefilters gemäß eines ersten Ausführungsbeispiels als einer möglichen Ausgestaltung einer verfahrensgemäßen Filterung in der dritten Ebene E3. Eine Zählvariable wird erhöht, sofern ein entsprechendes Sensorsignal anliegt. In diesem Beispiel bei einer Änderungsrate der Beleuchtungsstärke größer gleich 1,3 Ix/s. Die Zählvariable muss einen einstellbaren Schwellenwert überschreiten, damit ein Triggersignal von beispielsweise 3 s erzeugt wird. Dieses Verfahren weißt ein Tiefpassverhalten auf. Im Anschluss wird die Zählvariable zurückgesetzt.

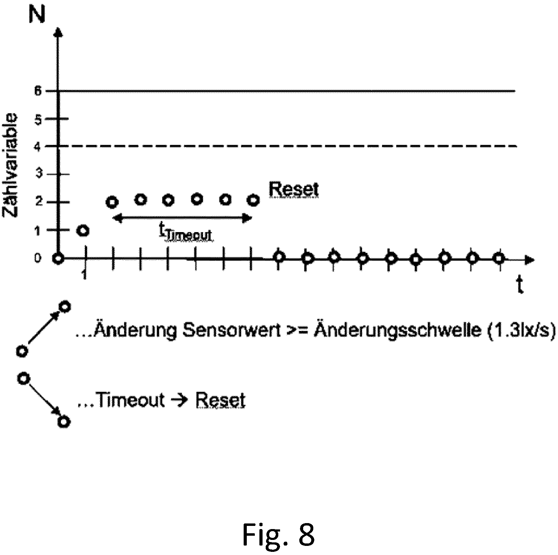

- Fig. 8: ein zeitlicher Verlauf der Funktionsweise eines Softwarefilters gemäß eines zweiten Ausführungsbeispiels als einer möglichen Ausgestaltung einer verfahrensgemäßen Filterung in der dritten Ebene E3. In diesem Fall wird jedoch im Unterschied zum zeitlichen Verlauf gemäß dem Ausführungsbeispiel in Fig. 7 nach einer Zeitdauer t_{Timeout}, in welcher kein Anstieg der Zählvariablen zu verzeichnen ist, diese wieder zurückgesetzt. Somit wird ein unerwünschtes kumulieren der Zählvariablen über einen längeren Zeitraum vermieden.

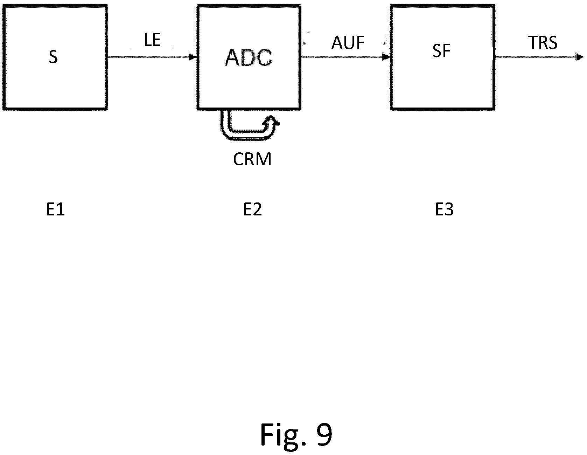

- Fig. 9: ein Ausführungsbeispiel einer Analog-Digital-Conversion (ADC) im Continuous Mode. In diesem Fall erfolgt keine Filterung in der Mikrocontroller Peripherie auf Ebene 2. Auswertung und Filterung des Sensorsignales erfolgt ausschließlich in Software. Der Prozessor hat hierbei hohen Rechenaufwand und somit Strombedarf.

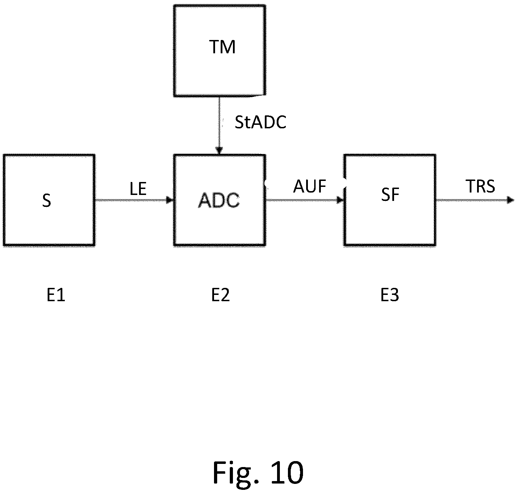

- Fig. 10: ein Ausführungsbeispiel einer ADC im single shot mode. Die ADC wird mittels Timer zu äquidistanten Zeitpunkten gestartet. Auswertung und Filterung des Sensorsignales erfolgt ausschließlich in Software. In diesem Fall findet in der Mikrocontroller Peripherie auf Ebene 2 keine Filterung statt.

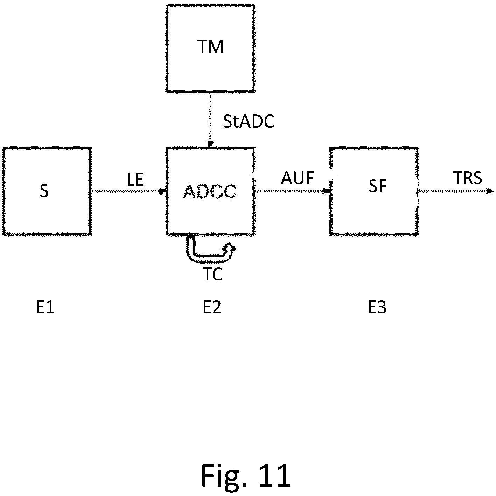

- Fig. 11: ein erstes Ausführungsbeispiel einer Analog-Digital-Conversion-Computation (ADCC) im single shot mode. Die ADCC wird mittels Timer zu äquidistanten Zeitpunkten gestartet. Mithilfe der Computation-Erweiterung des ADC kann ein Threshold Compare (TC) stattfinden, indem der eingelesene Sensorwert mit einem einstellbaren Schwellenwert verglichen wird. Nur falls die konfigurierbare Einstellung wie beispielsweise Sensorwert kleiner Schwellenwert erfüllt ist, wird der Prozessor aus dem Ruhezustand geholt und ein Softwarefilter wird ausgeführt. Das stellt ein Verfahren zur optimierten Stromaufnahme dar.
- Fig.: 12 ein zweites Ausführungsbeispiel einer ADCC im single shot mode. Die ADCC wird mittels Timer zu äquidistanten Zeitpunkten gestartet. Mithilfe der Computation-Erweiterung des ADC kann zusätzlich zum Threshold Compare TC ein Derivate Threshold Compare (DTC) stattfinden, bei dem ein Vergleich der Änderungsrate mit einem Schwellenwert erfolgt, indem die Änderung des eingelesenen Sensorwertes mit einem einstellbaren Schwellenwert verglichen wird. Nur falls die konfigurierbare Einstellung wie beispielsweise Sensorwert kleiner Schwellenwert x und Sensoränderungsrate größer Schwellenwert y erfüllt ist, wird der Prozessor aus dem Ruhezustand geholt und ein Softwarefilter erfolgt. Das stellt ein Verfahren zur optimierten Stromaufnahme dar.

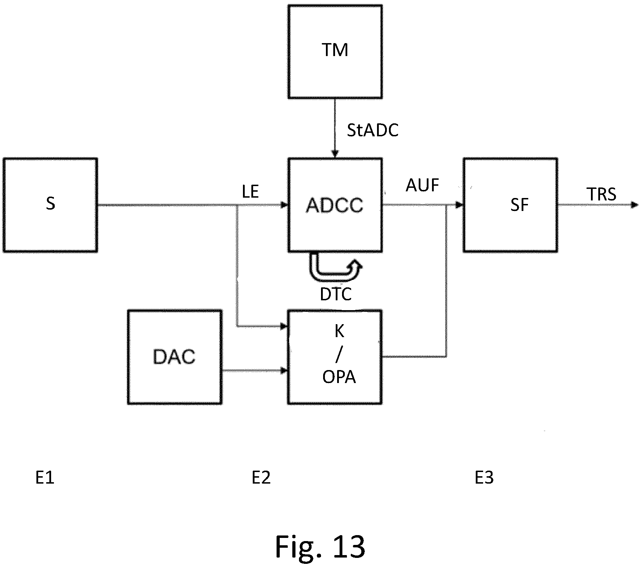

- Fig. 13: ein drittes Ausführungsbeispiel einer ADCC im single shot mode. Die ADCC wird mittels Timer zu äquidistanten Zeitpunkten gestartet. Mithilfe der Computation-Erweiterung der ADC kann ein Derivate Threshold Compare (DTC) stattfinden, bei dem ein Vergleich der Änderungsrate mit einem Schwellenwert erfolgt, indem die Änderung des eingelesenen Sensorwertes mit einem einstellbaren Schwellenwert verglichen wird. Nur falls die konfigurierbare Einstellung wie beispielsweise Sensoränderungsrate größer Schwellenwert erfüllt ist, wird der Prozessor aus dem Ruhezustand geholt und ein Softwarefilter erfolgt. Gleichzeitig vergleicht ein Komparator, alternativ ein Operationsverstärker, den Sensorwert mit einem einstellbaren Wert, welcher beispielsweise intern mit einem Digital Analog Converter (DAC) erzeugt werden kann. Hieraus kann die Tag/Nacht Information erhalten werden. Das stellt ein Verfahren zur optimierten Stromaufnahme dar.
- Fig.: 14ein viertes Ausführungsbeispiel einer ADCC im single shot mode. Die ADCC wird mittels Timer zu äquidistanten Zeitpunkten gestartet. Mithilfe der Computation-Erweiterung des ADC kann ein Derivate Threshold Compare (DTC) stattfinden, bei dem ein Vergleich der Änderungsrate mit einem Schwellenwert erfolgt, indem die Änderung des eingelesenen Sensorwertes mit einem einstellbaren Schwellenwert verglichen wird. Gleichzeitig vergleicht ein Komparator, alternativ ein Operationsverstärker, den Sensorwert mit einem einstellbaren Wert, welcher beispielsweise intern mit einem DAC erzeugt werden kann. Hieraus kann die Tag/Nacht Information erhalten werden. Beide Informationen werden in einer Configurable Logic Cell (CLC oder CLC-Logik) weiterverarbeitet. Die CLC holt den Prozessor nur bei Bedarf für eine finale Überprüfung aus dem Ruhezustand, optional kann das Triggersignal direkt ausgegeben werden. Das stellt ein Verfahren zur optimierten Stromaufnahme dar.

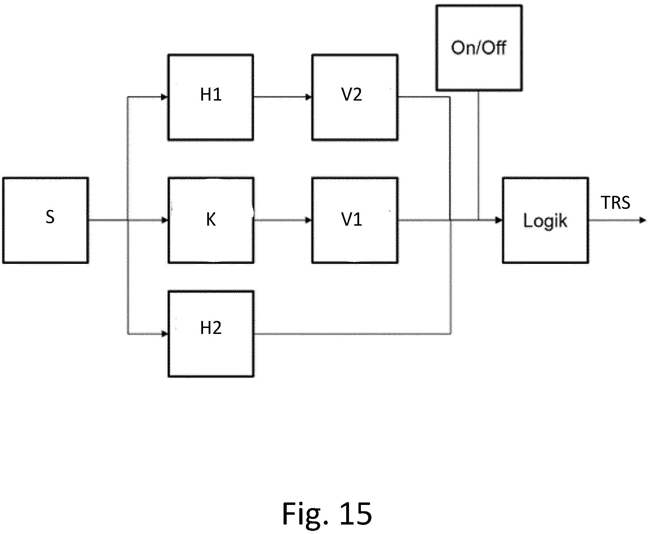

- Fig. 15: eine alternative Ausgestaltung eines analogen Konzepts zur Verwirklichung des Verfahrens als Alternative zu den bisher genannten. Hierbei wird kein Prozessor zur Auswertung verwendet, sondern lediglich eine diskret aufgebaute Schaltung. Hierbei werden mehrere IC Bausteine benötigt, wobei deren Strombedarf möglichst klein gehalten werden muss.

Ein in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13, Fig. 14, Fig. 15 ganz oder in Teilen in seinem Ablauf und/oder in ganz oder in Teilen zu seiner Verwirklichung geeigneten Elementen dargestelltes Verfahren zur Aktivierung einer Lichtfunktion an einem am ruhenden Verkehr teilnehmenden Fahrzeug, sieht eine softwarebasierte Auswertung verschiedener sensorisch erfassbarer Randbedingungen zur Aktivierung der Lichtfunktion vor.

Bei der Lichtfunktion handelt es sich bevorzugt um eine aktive Rückstrahllichtfunktion einer als ein kurz als AR bezeichneter Aktiver Rückstrahler ausgeführten und/oder ein AR umfassenden Fahrzeugleuchte und/oder um eine aktive Parklichtfunktion einer als ein kurz als AP bezeichnetes Aktives Parklicht ausgeführten und/oder ein AP umfassenden Fahrzeugleuchte.

Das Verfahren sieht vor, ein kurz auch als Sensorsignal bezeichnetes Ausgangssignal eines Sensors dauerhaft oder in wiederkehrenden Zeitabschnitten zu überwachen und mit einem Schwellenwert zu vergleichen und nur bei einer Überschreitung des Schwellenwerts diesen einen Sensorsignals einen Entscheidungszyklus unter Heranziehung der softwarebasierten Auswertung zu starten, an dessen Ende eine Entscheidung stattfindet, ob die aktive Rückstrahllichtfunktion eingeschaltet wird, oder ausgeschaltet bleibt.

So wird die softwarebasierte Auswertung nur dann ausgeführt, wenn eine Aktivierung der Rückstrahllichtfunktion zumindest wahrscheinlich ist.

Die softwarebasierte Auswertung wird am Ende des Entscheidungszyklusses wieder abgeschaltet und bleibt so lange abgeschaltet, bis wieder eine Überschreitung des Schwellenwerts durch das Sensorsignal vorliegt.

Die kurz auch als Sensorwert bezeichnete Wert und/oder Stärke und/oder Höhe des Sensorsignals ist einer Einwirkung eines Umwelteinflusses auf den Sensor proportional, für mindestens eine beispielsweise physikalische Eigenschaft des Umwelteinflusses der Sensor empfindlich ist.

Es ist ersichtlich, dass das Verfahren insbesondere zur stromsparenden Filterung von Eingangssignalen zur Erzeugung von validen Ausgangssignalen für eine Lichtfunktion AR und/oder AP geeignet ist.

Der Sensorwert kann im Falle eines Starts eines Entscheidungszyklusses selbst eine eine Randbedingung abbildende Eingangsgröße für den Entscheidungszyklus bilden.

Um möglichst sparsam mit im abgestellten Fahrzeug nur begrenzt vorhandener Energie umzugehen, ist während des Entscheidungszyklusses eine vorzugsweise softwarebasierte Auswertung verschiedener Randbedingungen notwendig, um zu entscheiden, ob eine Lichtfunktion, wie etwa eine aktive Rückstrahllichtfunktion und/oder eine aktive Parklichtfunktion, aktiviert wird, oder nicht.

Insbesondere die softwarebasierte Auswertung verschiedener Randbedingungen zieht jedoch selbst einen nicht unerheblichen Energieverbrauch nach sich. Daher wird diese verfahrensgemäß nur dann ausgeführt, wenn eine mögliche Aktivierung der Lichtfunktion zumindest wahrscheinlich ist.

Hierzu dient der Vergleich des Sensorwerts des zuvor auch als Sensorsignal bezeichneten Ausgangssignals eines Sensors mit einem Schwellenwert, welcher Sensor eine Größe in der Umgebung des beispielsweise nächtlich abgestellten eigenen Fahrzeugs erfasst, deren Vorhandensein nicht nur bevorzugt in einen anschließenden Entscheidungszyklus mit einfließt, sondern deren Vorhandensein vorteilhaft Voraussetzung ist für eine am Ende des Entscheidungszyklus stehende Entscheidung zur Aktivierung der Lichtfunktion.

Um die voranstehenden Randbedingungen zu erfüllen, sieht das Verfahren vor, ein einer Einwirkung eines Umwelteinflusses auf den Sensor proportionales Ausgangssignal des Sensors hinsichtlich dessen kurz als Sensorwert bezeichneten Wert und/oder Stärke und/oder Höhe permanent oder in wiederkehrenden, periodischen Zyklen zu erfassen und mit einem vorgegebenen Schwellenwert zu vergleichen.

Grundsätzlich ist denkbar, auch mehrere Sensorwerte zu überwachen, wobei die Überwachung eines Sensorwerts die Erfassung des Ausgangssignals eines Sensors und einen Vergleich des Ausgangssignals mit einem Schwellenwert umfasst. Erst wenn der Sensorwert den Schwellenwert übersteigt, wird eine softwarebasierte Auswertung verschiedener durch Sensoren überwachter und/oder erfassbarer Randbedingungen gestartet, an deren Ende eine Entscheidung stattfindet, ob die Lichtfunktion beispielsweise zur Erfüllung einer aktiven Rückstrahllichtfunktion und/oder einer aktiven Parklichtfunktion eingeschaltet wird, oder ausgeschaltet bleibt. Hierdurch erfolgt eine softwarebasierte Auswertung verschiedener Randbedingungen nur dann, wenn eine mögliche Aktivierung der Lichtfunktion beispielsweise zur Erfüllung einer aktiven Rückstrahllichtfunktion und/oder einer aktiven Parklichtfunktion zumindest wahrscheinlich ist.

Wichtig ist an dieser Stelle hervorzuheben, dass wenn mehrere Sensorwerte überwacht werden, es sich dabei bevorzugt um die Ausgangssignale mehrerer Sensoren handelt. Grundsätzlich ist jedoch auch denkbar, dass es sich um mehrere, vorteilhaft beispielsweise verschiedenartig auswertbare Ausgangssignale eines Sensors handelt.

Die auf die Überwachung des Sensorwerts - als Ergebnis eines Vergleichs des Ausgangssignals eines Sensors mit einem Schwellenwert beispielsweise bei einer Überschreitung des Schwellenwerts die Entscheidung fällt, die softwarebasierte Auswertung zu starten - gegebenenfalls folgende softwarebasierten Auswertung, an deren Ende die Entscheidung steht, ob die Lichtfunktion beispielsweise zur Erfüllung einer aktiven Rückstrahllichtfunktion und/oder einer aktiven Parklichtfunktion eingeschaltet wird, oder ausgeschaltet verbleibt, wird hierbei als Entscheidungszyklus bezeichnet.

Am Ende eines solchen Entscheidungszyklusses wird die softwarebasierte Auswertung wieder abgeschaltet und verbleibt so lange abgeschaltet, bis wieder eine Überschreitung des Schwellenwerts durch den Sensorwert vorliegt.

Vorteilhaft kann die Aktivierung der Rückstrahllichtfunktion nach einer vorgebbaren Zeitspanne wieder rückgängig gemacht werden.

Das hier vorgestellte Verfahren stellt den Betrieb des AR und/oder des AP stromsparend und zuverlässig sicher. Die Notwendigkeit einer stromsparenden Verwirklichung des Verfahrens zur softwarebasierten Auswertung resultiert unter anderem daraus, dass das Verfahren insbesondere im Aus-Zustand des Fahrzeuges ausgeführt wird. In diesem Zustand, in dem sich die Zündung in Aus-Stellung befindet, findet die Versorgung der Fahrzeugelektronik üblicherweise über die Fahrzeugbatterie statt, welche einen nur begrenzten Energievorrat besitzt.

Vorteile ergeben sich unter Anderem dadurch, dass das Verfahren eine Verwirklichung eines AR und/oder AP mit einem Ruhestromverbrauch von im Mittel kleiner als 100 µA ermöglicht. Bei Aktivierung des AR und/oder AP kann für die Dauer des Betriebs der Lichtfunktion ein deutlich höherer Betriebstromverbrauch vorliegen.

Das Verfahren setzt sich mit dem Umstand einer zunehmenden Elektrifizierung von Fahrzeugen auseinander, welche zur Folge hat, dass immer mehr Elektronik und Steuergeräte in Fahrzeuge Einzug finden. Hieraus resultiert jedoch, dass der Energie- und Strombedarf für den Betrieb dieser Systeme zunimmt. Entwicklungen in der Halbleitertechnologie und insbesondere Prozessortechnologie ermöglichen dabei allerdings einen energieeffizienteren Betrieb von Elektronik, sofern das Potenzial dieser neuen Möglichkeiten auch ausgeschöpft wird.

Unter anderen geht die aktuelle Entwicklung von Prozessoren, insbesondere von Mikrocontroller, in Richtung der Mikrocontroller Peripherien. Hierbei sind etablierte Peripherien zum Beispiel Analog-Digital-Wandler, kurz ADC, Timer oder pulsweitenmodulierte, kurz PWM Funktionen. Grundsätzlich werden aber auch Kommunikationsschnittstellen wie SPI oder I2C über Peripherien abgebildet. Diese Peripherien sind besonders hilfreich, um die Prozessorlast und den Stromverbrauch von Mikrocontrollern drastisch zu verringern. Hersteller von Prozessoren und Mikrocontrollern investieren deshalb in die Entwicklung neuer Peripherien, um beispielsweise den zukünftigen und gesteigerten Anforderungen an Sicherheit und den sicheren Betrieb zu garantieren. Als Beispiel sei hier die Verschlüsselung von Kommunikation erwähnt.

Das Verfahren erlaubt zu dessen Verwirklichung die Nutzung solcher Peripherien in Prozessoren, womit ein effizienter und stromsparender Betrieb eines AR und/oder AP verwirklicht werden kann.

Vorteilhaft sieht das Verfahren eine Filterung und Auswertung von Eingangsgrößen in Form von in Sensorwerten resultierenden Einwirkungen von Umwelteinflüssen auf einen oder mehrere Sensoren auf mindestens einer, bevorzugt jedoch auf mehreren Ebenen E1, E2, E3 vor, um zu einer ein valides Ausgangssignal des Entscheidungszyklus bildenden Entscheidung zu gelangen, ob die Lichtfunktion aktiviert wird, oder nicht (Fig. 1).

Besonders hervorzuheben ist die Filterung auf Ebene der Mikrocontroller Peripherie, welche durch eine feste oder variable Konfiguration während des Betriebes, abhängig des aktuellen Umgebungszustandes, einen komplexen Filter aufbauen kann.

Das Verfahren basiert, wie in Fig. 1 dargestellt, auf einer auf mindestens einer, bevorzugt jedoch auf mehreren Ebenen durchgeführten Filterung von Eingangssignalen. Durch die Signalfilterung kann am Ende ein valides Ausgangssignal ausgegeben werden. In dem in Fig. 1 dargestellten Beispiel sind drei Ebenen E1, E2, E3 erkennbar. Die erste Ebene E1 bildet die mechanische Filterung beispielsweise durch Abschattung mittels Blende und/oder optische Filterung beispielsweise mittels Begrenzung des Akzeptanzwinkels des Sensors. In dieser Ebene E1 oder einer folgenden Ebene E2, E3 erfolgt alternativ oder zusätzlich eine Filterung unerwünschter Wellenlängen der Eingangsstrahlung. Die darauffolgende zweite Ebene E2 wird in einem Prozessorbaustein, beispielsweise in Form eines Mikrocontrollers, in dessen Peripherien abgebildet. Ebenfalls ist ein Prozessor wie ein FPGA (Field Programmable Gate Array) denkbar. Die folgende dritte Ebene E3 erfolgt ebenfalls in einem Prozessorbaustein, dieses Mal jedoch in Software.

Die stromzehrende Filterung in der dritten Ebene E3 findet jedoch nur statt, wenn in den beiden vorangehenden Ebenen E1, E2 bereits feststeht, dass die Filterung in der dritten Ebene wahrscheinlich zum Ergebnis einer Aktivierung der Lichtfunktion kommt.

Das in Fig. 1 schematisch in seinem Ablauf anhand einer Filterung auf mehreren Ebenen dargestellte Verfahren läuft wie folgt ab. Zunächst kommt es zu einer Einwirkung eines Umwelteinflusses in einer Umgebung U einer eine erste Ebene E1 bildenden Fahrzeugleuchte. Bei dem Umwelteinfluss kann es sich beispielsweise um eine Lichtquelle LQ in der Umgebung U handeln. Die Filterung der ersten Ebene E1 findet in der beispielsweise als Heckleuchte ausgeführten Fahrzeugleuchte statt, wo auch die Lichtfunktion AR und/oder AP am Ende des Entscheidungszyklusses nach positiver Entscheidung unter Berücksichtigung mehrerer Randbedingungen aktiviert wird, um einen anderen Verkehrsteilnehmer V in der Umgebung U auf die Anwesenheit des am ruhenden Verkehr teilnehmenden Fahrzeugs aufmerksam zu machen.

In der Fahrzeugleuchte findet auf der ersten Ebene E1, die beispielsweise durch einen hinter einer Lichtscheibe LS und einer Blende B angeordneten Sensor S verwirklicht ist, eine erste Filterung von Einflüssen aus der Umgebung U statt, indem diese Einflüsse nur durch die Lichtscheibe LS und an der Blende B vorbei auf den Sensor S einwirken können. Der Sensor wiederum ist für mindestens eine beispielsweise physikalische Eigenschaft eines Einflusses aus der Umgebung U, wie etwa einer Einstrahlstärke von einer in der Umgebung befindlichen Lichtquelle LQ abgestrahlten Lichts, empfindlich.

Ein kurz als Sensorwert bezeichneter Wert des Ausgangssignals des Sensors S ist dieser Einstrahlstärke proportional.

In der zweiten Ebene E2 erfolgt ein Vergleich des Sensorwerts mit einem Schwellenwert. Dieser Vergleich stellt eine Filterung auf der zweiten Ebene E2 dar. Die zweite Ebene E2 wird beispielsweise durch einen Hardwarefilter HF, beispielsweise eine MCU Peripherie gebildet. Nur wenn sich nach der Filterung in der zweiten Ebene E2 ergibt, dass eine Überschreitung des Schwellenwerts vorliegt, kommt es zu der durch den softwarebasierten Entscheidungszyklus gebildeten finalen Filterung auf der dritten Ebene E3.

Die dritte Ebene E3 schließlich wird durch ein Softwarefilter SF gebildet.

Im Unterschied zu einer Filterung und Auswertung von Eingangssignalen auf Ebene eins E1 beispielsweise vermittels einer hinter einer Lichtscheibe LS angeordneten Blende B, hinter der wiederum ein Sensor angeordnet ist, der für mindestens eine beispielsweise physikalische Eigenschaft eines Einflusses aus der Umgebung U, wie etwa von einer Lichtquelle LQ abgestrahlten Lichts, empfindlich ist, und Ebene drei E3 vermittels Software, wird der softwarebasierte Entscheidungszyklus verfahrensgemäß erst gestartet, wenn auf Ebene zwei E2 festgestellt wird, dass ein Sensorwert eines Sensors in der ersten Ebene E1 einen vorgegebenen Schwellenwert überschreitet.

Insbesondere ergeben sich folgende Vorteile aus der mehrschichtigen Filterung und Auswertung der Eingangssignale zu validen Ausgangssignalen, insbesondere jedoch durch Anwendung von Mikrocontroller Peripherien:
- Energieeffizientes Verfahren. Dies bezieht sich auf das Verfahren und die darin verwendete Signalfilterung sowie Datenverarbeitung.
- Stromsparend. Dies bezieht sich auf einen Stromverbrauch in einer Größenordnung von 100 µA oder weniger, wobei sich der Wertebereich sich auf die Elektronik zur Verarbeitung der Daten bezieht. Der Wertebereich bezieht sich jedoch nicht auf die nachgeschaltete Lichtfunktion oder zu deren Verwirklichung vorgesehene LEDs, die das System damit steuert und deren Stromverbrauch erheblich höher sein kann.
- Genaues Abgrenzen der Situationen möglich, wann die Lichtfunktion - beispielsweise der/das AR und/oder AP eingeschalten wird, um möglichst wenig Energie infolge von unnötigem Einschalten zu verschwenden, und wann eben nicht. Es kann mit Hilfe des Verfahrens relativ sicher unterschieden werden, wann das System benötigt wird und wann beispielsweise eine Ampel ihr Lichtzeichen in der Umgebung ändert, die Sonne einstrahlt, eine Baustellenbeleuchtung das Fahrzeug anblinkt und/oder eine Straßenlaterne den Sensor anleuchtet - und die Lichtfunktion somit nicht eingeschaltet werden sollte.
- Flexibel beispielsweise rekonfigurierbar, je nach Umgebungszustand, wie etwa Tag, Nacht, Dämmerung, etc.. Relevante Faktoren und Parameter können entsprechend gewichtet werden.
- Verarbeitung in Echtzeit.
- Skalierbare Geschwindigkeit bei der Verarbeitung von Sensordaten, ohne höheren Energiebedarf.
- Filterung von Störeingangsgrößen auf allen Ebenen E1, E2, E3 möglich.
- Robustes und leicht konfigurierbares sowie parametrisierbares Filtersystem, welches insbesondere eine Vermeidung von zu hohen Störgrößen, wie etwa Rauschen im Signal erlaubt.
- Modularisierung: das Verfahren kann für jede Leuchte oder andere Anwendungen relativ leicht individuell angepasst werden. Dies kann beispielsweise aufgrund unterschiedlicher Sichtfelder von Sensoren erforderlich sein und/oder infolge von unterschiedlichen Blendengeometrien und/oder Abschattungen beispielsweise in der Leuchte aufgrund unterschiedlicher Formgebungen von Leuchten.

Das Verfahren erfüllt die Anforderung nach geringem Stromverbrauch der Funktion AR und/oder AP. Dabei stellt es eine Lösung auf die Frage zur Verfügung, wie ein beispielsweise einer Bestrahlungsstärke oder Beleuchtungsstärke auf einen Sensor proportionales Eingangssignal im Verfahrensablauf möglichst effizient zu einem zur Aktivierung der Lichtfunktion, insbesondere des AR und/oder AP dienenden validen Ausgangssignal verarbeitet werden kann.

Im weitesten Sinne kann die nachfolgend auch als Eingangssignal in das Verfahren bezeichnete Einwirkung eines Umwelteinflusses auf den Sensor, für mindestens eine beispielsweise physikalische Eigenschaft des Umwelteinflusses der Sensor empfindlich ist, beispielsweise aus elektromagnetischer Strahlung unterschiedlichster Wellenlänge bestehen, entsprechend einem Einstrahlungsspektrum. Die Quellen hierfür kommen aus der Umgebung des am ruhenden Verkehr teilnehmenden Fahrzeugs. Im besten Fall ist Licht eines Fahrzeugscheinwerfers eines fremden Fahrzeugs, welches sich einem parkenden eigenen Fahrzeug mit integrierter AR und/oder AP-Funktion nähert ursächlich für das Eingangssignal. Dieses Licht des fremden Fahrzeugs bewirkt, dass sich die Beleuchtungsstärke auf dem Sensor signifikant erhöht. Auf ein solches Szenario soll mit Aktivierung der Funktion AR und/oder AP reagiert werden. Auch beispielsweise ein Fahrrad kann hierbei als fremdes Fahrzeug mit Scheinwerfer gemeint sein. Darüber hinaus kann auch ein Spaziergänger mit leuchtender Taschenlampe analog hierzu ursächlich für ein Eingangssignal für das System sein. Als weitere Eingangssignale sind Umgebungslicht wie Sonnenlicht und/oder Mondlicht zu betrachten. Diese Eingangssignale sollten nicht nur als Störsignale angesehen werden, sondern vielmehr als Informationsgeber, ob der Zustand Tag, Dämmerung oder Nacht vorliegt, da die Funktion AR und/oder AP insbesondere bei niedriger Umgebungshelligkeit, wie etwa bei Dämmerung oder während der Nacht aktiviert werden soll. Weitere Eingangssignale wie etwa Straßenbeleuchtung, Ampellicht und/oder Baustellen-Warnleuchten werden als Störsignale aufgefasst, welche es effizient zu filtern gilt.

Das Verfahren sieht einen Filter auf mindestens einer Ebene, bevorzugt auf mehreren Ebenen vor. Gemäß dem voran beschriebenen Verfahren wird ein Filter auf bis zu drei Ebenen E1, E2, E3 beschrieben. Weitere Ebenen sind denkbar und umsetzbar.

Die erste Ebene E1 bildet ein mechanisches und/oder optisches Filter. Dieses kann in einem einfachsten Fall aus dem Sensor S selbst bestehen. Der Sensor S ist dabei in der Regel ein fotosensitives Element. Dieses kann eine Fotodiode, einen Fototransistor, ein integriertes Bauteil oder ähnliches sein oder umfassen.

Zum einen besitzen diese Sensoren S einen Sensorakzeptanzwinkel α, also ein Bereich, aus welchem Strahlung detektiert werden kann. Dieser Sensorakzeptanzwinkel α ist so gewählt, dass lediglich der relevante Bereich, in welchem ein Eingangssignal, wie ein Lichtstrahl eines Fahrzeugscheinwerfers eines fremden Fahrzeugs auftrifft, abgedeckt ist. Somit können bereits Störeingangssignale wie eine Straßenbeleuchtung effektiv gefiltert werden. Des Weiteren kann der Sensorakzeptanzwinkel α mittels einer Blende B oder auch einem zusätzlichen Bauteil wie beispielsweise einer Art trichterförmiges Bauteil, eingegrenzt werden. Eine optische Filterung kann ebenfalls am Sensor S stattfinden. Dieser weist normalerweise eine Filterung von unerwünschten Wellenlängen des Lichtes oder Strahlung auf. Auch kann das Filter beispielsweise dem Verlauf der als so genannte V-Lambda-Kurve bezeichneten Hellempfindlichkeitskurve angepasst sein, welche der Wahrnehmung des menschlichen Auges bezüglich der einzelnen Wellenlängen des elektromagnetischen Spektrums angepasst ist. Das bedeutet eine hohe Sensitivität im grünen Bereich, mit beidseitigen Abflachungen in Richtung UV- und Infrarotbereich. Mit einem solchen optischen Filter können beispielsweise Störsignale basieren auf Infrarotstrahlung effektiv gefiltert werden. Eine zusätzliche optische, wellenlängenselektive Filterung ist mit einer geeigneten Lichtscheibe LS möglich. Beispielsweise würde die Positionierung des Sensors oder der Sensoren hinter einer roten Lichtscheibe, wie sie oft typisch in Heckleuchtenanwendungen ist, effektiv mögliche unerwünschte UV-Signale filtern. Somit stellt ein kurz auch mechanisch-optisches Filter genanntes mechanisches und/oder optisches Filter eine erste und effektive Vorfilterung für das Verfahren dar.

In der zweiten Ebene E2 wird nun das fotosensitive Sensorausgangssignal mit einem Prozessor, bevorzugt mit der Mikrocontroller Peripherie, weiterverarbeitet. Das Sensorausgangssignal kann hierbei ein analoges Spannungs- oder Stromsignal darstellen. Es sind jedoch auch andere Signalformen denkbar, wenn beispielsweise der Sensor über ein Bussystem wie I2C oder SPI ausgelesen wird. Anhand eines analogen Spannungssignales werden nun beispielhaft mehrere Möglichkeiten aufgezeigt. Im einfachsten Fall erfolgt eine Analog-Digital-Wandlung (ADC) des Spannungssignales und einer Weiterverarbeitung in Software. Dies allein schöpft jedoch nicht das volle Potenzial der Mikrocontroller Peripherien für entsprechender Stromoptimierung aus. An dieser Stelle wird auf ein mögliches Verfahren mit einem sogenannten ADCC/ADC² näher eingegangen, wobei weitere Verfahren nachfolgend auch noch beschrieben werden, welche beispielsweise in Kombination komplexe und effiziente Filter aufbauen.

Ein ADCC/ADC² (analog-digital-conversion-computation) ist eine erweiterte und optimierte ADC Peripherie. Die ADCC konvertiert nicht nur den analogen Spannungswert in einen digitalen Wert, sondern verfügt über weitere Funktionalitäten. Beispielsweise kann der umgewandelte Wert mit einem oberen und/oder unten Schwellenwert verglichen werden, und wird dieser über oder unterschritten, kann beispielsweise eine sogenannte Interrupt-Service-Routine (ISR) aufgerufen werden, um auf dieses Ereignis zu reagieren. Ein denkbarer Anwendungsfall wäre, dass nur wenn ein Tag/Nacht-Schwellenwert unterschritten wird, ein ISR ausgeführt wird. Nur dann ist der Zustand "Nacht" erreicht und die Funktion AR und/oder AP soll aktiviert werden können. Somit kann der Prozessor während der gesamten Tages in einen stromsparenden Ruhezustand versetzt werden und nur im relevanten Nachtzeitraum aktiv sein.

Da der Stromverbrauch von Prozessoren und insbesondere Mikrocontroller vor allem durch den CPU und den Speicher bestimmt wird, ist es ein wichtiges Bestreben, den Mikrocontroller möglichst viel in den Ruhezustand zu versetzten, wodurch CPU und Speicher abgeschaltet werden. Jedoch besteht trotzdem die Möglichkeit, dass die Peripherien auch während des Ruhezustandes arbeiten - also beispielsweise eine ADCC mit Schwellwertprüfung durchgeführt wird. Nur bei entsprechender positiver Schwellwertprüfung wird der Prozessor aufgeweckt und die relevanten Daten weiterverarbeitet.

Die dritte Ebene E3 der Filterung erfolgt in Software des Prozessors. Sofern die vorherigen Ebenen bereits effektiv gefiltert haben, müssen lediglich nur noch wenige und möglicherweise relevante Sensorsignale, verarbeitet werden. Generell ist darauf zu achten, dass die Auswertung in Software möglichst kurz und effizient erfolgt, damit der Prozessor schnellstmöglich wieder in den Ruhezustand gehen kann. Im besten Fall übernehmen die Peripherien des Prozessors die Hauptaufgabe an der Filterung. Dann muss in Software lediglich noch zwischen den verschiedenen Zuständen des Systems geschalten werden, wie beispielsweise zwischen den Zuständen "Tag" und "Nacht", und die Peripherien rekonfiguriert werden. Diese Rekonfiguration kann sehr schnell erfolgen.

Am Ende der Filterabfolge soll das Eingangssignal entweder als Störsignal gefiltert und verworfen werden oder als valides Ausgangssignal ausgegeben werden. Das Ausgangssignal kann dabei beispielsweise über einen Mikrocontroller-Ausgangspin erfolgen. Hiermit kann dann entsprechende Elektronik zur Ansteuerung von Lichtquellen wie etwa LEDs direkt aktiviert werden, um die Funktion AR und/oder AP zu vervollständigen. Ebenfalls ist es möglich, das Ausgangssignal entweder innerhalb der Leuchte zu belassen oder über die Fahrzeugschnittstelle dem Fahrzeugsteuergerät mitzuteilen. Damit könnten weitere Lichtfunktionen oder weitere Ereignisse ausgelöst werden. Beispielsweise lässt sich hierdurch auch die Verbindung von Scheinwerfer- und Heckleuchtenaktivierung am Fahrzeug gesamtheitlich steuern.

Die Ansteuerung der Lichtfunktion kann auch in einzelnen Segmente und/oder Raumwinkelbereichen erfolgen, um besonders effizient und/oder stromsparend und dadurch energiesparend zu agieren.

Diese Ausgestaltung kann beispielsweise so aussehen, dass bei der Detektion von Strahlung aus einer bestimmten Richtung auch nur der Teil einer Lichtfunktion angesteuert wird, welcher Teil hauptsächlich in diese Richtung zurückstrahlt und/oder - leuchtet.

Fig. 2 zeigt schematisch eine derartige Ausgestaltung einer Leuchte L, die in drei Akzeptanzraumwinkelbereiche 1, 2, 3 unterteilt ist, mit jeweils drei Sensoren S1, S2, S3 und jeweils drei den Sensoren zugeordneten Lichtfunktionssegmenten L1, L2, L3. Die Akzeptanzwinkel der Sensoren S1, S2, S3 stimmen in diesem Fall zumindest weitgehend mit den zugeordneten jeweiligen Hauptabstrahlrichtungen der Lichtfunktionssegmente L1, L2, L3 der Lichtfunktionen überein. Mit anderen Worten entspricht der jeweilige hauptsächliche Sensor Akzeptanzraumwinkelbereich 1, 2, 3 dem hauptsächlichen Abstrahlraumwinkelbereich des jeweils zum Sensor S1, S2, S3 zugeordneten Teils der Lichtfunktion. Detektiert beispielsweise Sensor S1 eine entsprechend schnell ansteigende hohe Strahlung und/oder Lichtstärke und/oder Beleuchtungsstärke und die zwei anderen Sensoren S2, S3 detektieren dies nicht, so kann - falls gewünscht und gesetzlich und/oder regelungstechnisch zulässig - nur das dem Sensor S1 zugeordnete Lichtfunktionssegment L1 eingeschaltet werden. Hierdurch wird ein entsprechend reduzierter Energiebedarf bei einer Verwirklichung des Verfahrens unter Aufrechterhaltung der Wirkungsweise für ein sich beispielsweise bei Nacht mit eingeschaltetem Scheinwerferlich näherndes fremdes Fahrzeug erhalten.

Das Verfahren eignet sich nicht nur für die Anwendung in Fahrzeugleuchten und/oder Scheinwerfern, sondern auch in weiteren Anwendungen, die auf eintreffende Strahlung reagieren sollen. Beispielsweise können mit diesem Verfahren auch Beleuchtungen von Zebrastreifen, Baustellen, Ampeln oder Straßenlaternen ausgerüstet werden, die nur dann bedarfsgerecht aktiviert werden, wenn sich beispielsweise ein Fahrzeug mit Scheinwerfer nähert. Dies spart insbesondere Energie sowie Ressourcen, schont die Umwelt und verringert die Lichtverschmutzung - bei gleichzeitigem Sicherheitsgewinn.

Es ist an dieser Stelle anzumerken, dass der Begriff Winkel im engeren Sinne eine zweidimensionale Bedeutung aufweist. In der hier vorliegenden Beschreibung wird der Begriff Winkel jedoch auch synonym zu dem Begriff Raumwinkel verwendet, welcher vielmehr eine dreidimensionale Bedeutung aufweist. Das vorliegende Verfahren und die dazu gehörende Anwendung sowie die hierzu ausgeführten Systeme beziehen sich stets auf ein reales 3D-Umfeld und daher i.d.R. auch auf den Begriff Raumwinkel.

Ein erstes Ausführungsbeispiel eines Aufbaus eines mechanisch optischen Filters als ein einen Teil des Verfahrens verwirklichendes Element für die erste Ebene E1 ist nachfolgend anhand Fig. 3 und Fig. 4 näher erläutert.

Fig. 3 und Fig. 4 zeigen einen schematischen Aufbau eines als Linsenfernrohr bekannten Refraktors, in einer zumeist als astronomisches Fernrohr bezeichneten Ausführung als Kepler-Fernrohr (Fig. 3) und dessen Umsetzung anhand einer Lichtscheibe LS und einer Optikscheibe OS einer Fahrzeugleuchte (Fig. 4). In Fig. 3 bezeichnet OK das Okular des Fernrohrs und OV das Objektiv des Fernrohrs. F_{Objektiv} bezeichnet in Fig. 3 und in Fig. 4 die Bildbrennebene, in welcher ein reelles Zwischenbild rZ abgebildet wird.

Dieser Aufbau kann zum Sammeln und Bündeln von Strahlung sowie zur Einstellung des Akzeptanzwinkels genutzt werden. Damit wird für die Anwendung, in Kombination mit einem beispielsweise auf einem Leiterbahnträger P angeordneten Chip als Sensor S, die Strahlungsintensität auf dem Sensor S erhöht - im Vergleich zu einer Verwirklichung ohne einen derartigen vorgeschalteten Aufbau. In Fig. 4 wird im speziellen ein Aufbau gezeigt, der sich für eine einfache, flexible und kostengünstige Filterfunktion bei einer Serienintegration in Leuchten eignet. Hier werden die erforderlichen optischen Flächen in vorhandene Bauteile einer Leuchte integriert. Durch den Aufbau eines Filters in Form einer Art Fernrohr kann die Lichtmenge aus einem bestimmten Raumwinkelbereich für den Sensor S signifikant erhöht werden. Gleichzeitig können auch Fehlinfoformationen für den Sensor S, wie etwa hohe Streulichtanteile aus der Umgebung, verringert oder gar vermieden werden. Der hier genannte, der Einstellung des Akzeptanzwinkels entsprechende bestimmte Raumwinkelbereich kann durch die Auslegung des optischen Systems relativ leicht vorgegeben werden. Durch die aus dem Aufbau folgende Erhöhung der Lichtmenge aus einem bestimmten Raumwinkelbereich wird auch die Signalintensität bei Schwachlichtverhältnissen verbessert und damit das Signal-Rausch-Verhältnis (SNR) und damit die technische Qualität des Eingangssignals als Nutzsignal für den Sensor positiv beeinflusst. Eine sicherere Erkennung des Umgebungszustands wird ermöglicht und die Wahrscheinlichkeit eines fehlerhaften Schaltens beziehungsweise Reagierens des Verfahrens wird verringert oder gar vermieden. In einem derartigen Aufbau in einer Leuchte dient die Lichtscheibe LS als wellenlängenselektive Schicht. Wird beispielsweise eine rote Lichtscheibe LS verwendet, können mögliche Störeinflüsse wie etwa UV-Strahlung gefiltert werden. Auch ist es beispielsweise umsetzbar, Infrarotstrahlung zu filtern.

Für einen Aufbau mittels vorgeschaltetem Optiksystem, wie etwa ein Fernrohraufbau ist es unerheblich, ob dabei ein aufrechtes oder invertiertes Bild am Sensor erzeugt wird. Beim Kepler-Fernrohr ist die Bildorientierung invertiert.

Neben dem Aufbau als Kepler-Fernrohr ist auch ein Aufbau als Galilei-Fernrohr umsetzbar. Der Vollständigkeit halber sei erwähnt, dass bei diesem Fernrohrtyp ein aufrechtes Bild erzeugt wird. Im Okular OK, entsprechend der dem Sensor S zugewandten Linse, wird hier eine Zerstreuungslinse entsprechend einer Linse mit negativer Brennweite eingesetzt. Für einen Aufbau in einer Leuchte ist dies auch umsetzbar, da die Linse vorteilhaft in einer Optikscheibe OS integriert wird und sich somit kunststofftechnisch, insbesondere spritzgusstechnisch auch in Hinblick auf die Entformbarkeit gut herstellen lässt.

In jedem Fernrohr-Fall werden nahezu parallele Lichtstrahlen durch eine das Objektiv OV bildende Sammellinse mit positiver Brennweite gesammelt, die ein reelles Zwischenbild rZ in ihrer Bildbrennebene F_{Objektiv} erzeugt. Da das Objektiv OV beziehungsweise der Bereich der Lichtscheibe LS, der eine solche Ausprägung aufweist, größer ist, als der Durchmesser beziehungsweise die Fläche des Sensors S, können auch weiter entfernte und damit lichtschwächere Bereiche vom Sensor beobachtet werden. Das erzeugte reelle Zwischenbild rZ wird durch das Okular OK beobachtet, das in Fig. 3 und Fig. 4 als Einzellinse ausgeführt ist. Das Zwischenbild entsteht in oder nahe der Brennebene F_{Objektiv} des Okulars OK. Dieses Zwischenbild dient als reelles Objekt für das Okular OK im astronomischen Fernrohr und als virtuelles Objekt im Falle des Galilei-Fernrohrs. Für den Aufbau relevant ist, dass ein Galilei-Fernrohr wegen der Brennweite
f'Okular < 0
eine kleine Baulänge hat und damit eine kleine oder kleinere Baulänge des die verfahrensgemäße Filterung in der ersten Ebene E1 verwirklichenden Aufbaus ermöglicht wird.

Es sei noch erwähnt, dass für jedes Fernrohr und für jeden hier genannten Fernrohraufbau die Objektivöffnung Aperturblende und gleichzeitig Eintrittspupille ist. Das Bild der Aperturblende hinter dem Okular OK bildet die Austrittspupille. Die Austrittspupille kann so gestaltet werden, dass sie gerade der Größe des Sensors S entspricht.

Zum Galilei-Fernrohr ist noch zu erwähnen, dass die Austrittspupille innerhalb des Okulars OK liegt, wo sie für den Sensor S nicht zugänglich ist. Dies führt zu einem geringen Feldwinkel, dem sogenannten Schlüssellocheffekt des Galilei-Fernrohrs. Dies kann in diesem Fall aber auch gezielt eingesetzt werden, um nur ganz bestimmte Raumwinkelbereiche zu beobachten.

Auch erwähnt sei, dass beim Kepler-Fernrohr am Ort des Zwischenbildes eine Feldblende eingesetzt werden kann, während dies beim Galilei-Fernrohr nicht möglich ist.

Der die verfahrensgemäße Filterung in der ersten Ebene E1 verwirklichende Aufbau kann auch als separates vorzugsweise einteiliges Optikelement, wie etwa einer als eine Optikscheibe ausgeführt sein, bei der das Objektiv OV und das Okular OK miteinander verbunden ausgeführt und zusätzlich zu einer optikfreien Lichtscheibe LS in eine Leuchte eingebaut sind.

Selbstverständlich sind auch optische Aufbauten mit Spiegeln, Prismen, Linsen und/oder Kombinationen von Spiegeln und Linsen, wie diese anhand katadioptrischer Systeme bekannt sind,gegebenenfalls zusätzlich auch mit Prismen für die Filterung in der ersten Ebene E1 einsetzbar. Aufgrund der Vielzahl an brechenden und spiegelnden Flächen ist ein solcher Aufbau jedoch für die Anwendung in Fahrzeugleuchten vergleichsweise weniger gut geeignet, da die Herstellung vergleichsweise kompliziert und kostenintensiver ist. Ferner ist ein solcher Aufbau aufgrund der Vielzahl an optisch wirksamen Flächen mit höheren Lichtverlusten behaftet.

Wichtig ist jedoch hervorzuheben, dass Prismen, wie Spiegel auch, helfen können den optischen Strahlengang zu falten und damit die Baulänge eines zur Verwirklichung einer verfahrensgemäßen Filterung der ersten Ebene E1 verwirklichenden Elements erheblich zu verringern.

Ein zweites Ausführungsbeispiel eines Aufbaus eines mechanisch optischen Filters als ein einen Teil des Verfahrens verwirklichendes Element für die erste Ebene E1 ist nachfolgend anhand Fig. 5 näher erläutert.

In Fig. 5 ist ein mechanisch optischer Aufbau eines einen Teil des Verfahrens verwirklichenden Elements dargestellt, welches wie der mechanisch optische Aufbau des eines einen Teil des Verfahrens verwirklichenden Elements aus Fig. 4 auch eine Verwirklichung der ersten Ebene E1 einer verfahrensgemäßen Filterung gemäß Fig. 1 widerspiegelt.

Ein fotosensitiver Sensor S mit einem Sensorakzeptanzwinkel α ist hinter einer Blende B mit entsprechender Öffnung und vorliegender Lichtscheibe LS angeordnet. In den Sensor S kann dabei bereits ein optisches Filter integriert sein, welches nur bestimmte Wellenlänge von elektromagnetischer Strahlung durchlässt. Beispielsweise kann dieses Filter die Empfindlichkeit des Sensors S bei Wellenlängen innerhalb desjenigen Bereichs des elektromagnetischen Spektrums nachbilden, die für das menschliche Auge sichtbar sind. Alternativ oder zusätzlich kann an dieser Stelle eine Infrarot- und/oder UV-Filterung vorgesehen sein.

Der Sensorakzeptanzwinkel α ist bei den meisten Sensoren möglichst groß gewählt, jedoch kann es zur energieeffizienten Durchführung des Verfahrens von Vorteil sein, diesen Winkel auf einen bestimmten Bereich einzuschränken.

Diese Einschränkung erfolgt durch eine Winkelakzeptanzfilterung anhand einer Blende B in der ersten Ebene E1. Die beispielsweise mit einem trichterförmigen Vorsatz ausgestattete Blende B weist einen Blendenakzeptanzwinkel β auf, der kleiner als der Sensorakzeptanzwinkel α ist und dadurch diesen filtert. Licht, etwa einer Straßenbeleuchtung, in Fig. 5 schematisch durch einen Pfeil SB angedeutet, welches aus einem Winkel auf die Lichtscheibe LS einstrahlt, der größer als der Blendenakzeptanzwinkel β ist, gelangt nicht zum Sensor S und wird also gefiltert. Demgegenüber gelangt beispielsweise durch einen Pfeil SW in Fig. 5 schematisch angedeutetes Scheinwerferlicht, welches aus einem Winkel auf die Lichtscheibe LS einstrahlt, der kleiner als der Blendenakzeptanzwinkel β ist, ungehindert zum Sensor gelangt. Mit diesem Winkelakzeptanzfilter können Störeingangssignale, wie beispielsweise Straßenbeleuchtungseinflüsse, effektiv ausgeblendet werden, wohingegen Scheinwerferlicht nach wie vor passieren kann.

Das Winkelakzeptanzfilter ist hiernach mechanisch verwirklicht, indem beispielsweise eine Blende in Form eines Trichters oder eines trichterförmigen Bauteils vor dem Sensor S platziert wird. Darüber hinaus kann die Lichtscheibe LS als Wellenlängenfilter dienen, um beispielsweise Infrarotlicht zu filtern.

Die Filterung auf dieser mechanisch optischen Ebene stellt eine einfache, jedoch effektive Methode dar, um einen Teil von Störeingangssignalen zu unterbinden.

Grundsätzlich ist denkbar, dass auch adaptive Blenden B vor dem Sensor S je nach Anwendungsfall und benötigter Systemflexibilität zum Einsatz kommen. Ein Beispiel hierfür ist der Einsatz einer automatisierten Irisblende. Eine Irisblende bezeichnet in der angewandten Optik eine Blende mit variabler Öffnungsweite, deren Öffnung sich bei feststehendem Mittelpunkt so verändern lässt, dass sie ungefähr kreisförmig bleibt. Ihre Funktion entspricht der Iris des menschlichen Auges.

Weiterhin können im optischen System vor dem Sensor S Blenden B angeordnet werden, um den Akzeptanzwinkel entsprechend Vorgabe einzuschränken, falls erforderlich die Bildqualität auf dem Sensor S zu erhöhen und/oder ein mögliches Übersteuern des Sensors S zu verhindern.

Wird als Sensor S eine Kamera oder ein Kamerachip verwendet, kann mit entsprechenden Blenden B auch zusätzlich die Tiefenschärfe eingestellt werden, was für die Detektion der einstrahlenden Strahlungs- und/oder Lichtmenge hilfreich ist. Auch können mit Blenden B Effekte wie das so genannte Blooming vermieden oder zumindest verringert werden, wenn beispielsweise ein CCD-Sensor zum Einsatz gebracht wird.

Ein momentaner Zustand eines Ausführungsbeispiels einer Verwirklichung einer verfahrensgemäßen Filterung in der zweiten Ebene E2 ist in Fig. 6 dargestellt. Nach dem Start ST und erfolgter Initialisierung IM des Mikrocontrollers kann lediglich aus einem Modus Nacht NC heraus ein Trigger TR aktiviert und somit ein Ausgangssignal erzeugt werden. Ist der Trigger TR aktiviert, schreitet ein Timer TM in gleichbleibenden Zeitintervallen voran, in welchen Zeitintervallen beispielsweise Sensorwerte aus der ersten Ebene E1 mit Schwellenwerten verglichen werden. Stellvertretend ist die Aktivierung des Triggers TR durch ein Signal TAN zum Einschalten des Triggers TR vom Zustand Nacht NC ausgehend zum Trigger TR und durch ein Signal TAU zum Ausschalten des Triggers TR vom Trigger TR ausgehend zum Zustand Nacht NC dargestellt. Von einem Zustand Tag TG kann nur in Zustand Nacht NC gewechselt werden. Dies ist jeweils durch einen Pfeil entsprechend einmal einer Zustandsänderung "Es ist Tag" EIT vom Zustand Nacht NC zum Zustand Tag TG und entsprechend einmal einer Zustandsänderung "Es ist Nacht" EIN vom Zustand Tag TG zum Zustand Nacht NC dargestellt. Eine ADCC erfolgt nach wie vor in Peripherie bei Tag TG, Nacht NC und gegebenenfalls auch während des Zustandes Trigger TR, selbst wenn sich der Mikrocontroller jeweils im Ruhezustand befindet.

Ein erstes Ausführungsbeispiel eines einen Teil des Verfahrens verwirklichenden Elements für die zweite Ebene E2 und die dritte Ebene E3 ist nachfolgend anhand Fig. 9 näher erläutert.

In Fig. 9 ist ein einfacher, das Verfahren verwirklichende Analog-Digital-Converter ADC Continuous Read Aufbau mit einem Sensor S in der ersten Ebene E1 und mit lediglich einer Analog-Digital-Converter ADC Peripherie eines Mikrocontrollers in der zweiten Ebene E2 gezeigt. Die Analog-Digital-Converter ADC Peripherie überführt die analogen Sensorsignale in einen digitalen Wert. Dies erfolgt im in Fig. 9 durch einen Pfeil angedeuteten Continous Read Modus CRM, in welchem der Sensor S dauerhaft und so schnell wie möglich ausgelesen wird. Das Auslesen ist durch einen Pfeil LE in Fig. 9 angedeutet. Nach jeder erfolgen Wandlung wertet der Mikrocontroller in Software die Sensorwerte aus. Beispielsweise könnte eine Tag-/Nachtschwelle mit den Sensorwerten verglichen werden oder aber auch die Änderungsrate des Sensorwertes und somit die Beleuchtungsstärkeänderung berechnet werden. Überschreitet ein Sensorwert einen Schwellenwert, erfolgt ein durch einen Pfeil AUF angedeutetes Aufwecken eines Softwarefilters SF. Das Softwarefilter SF bildet die dritte Ebene E3. Die Auswertung sowie Filterung erfolgt in Software und der das Softwarefilter SF ausführende Prozessor muss hierfür viele Sensorwerte dauerhaft auswerten, weshalb eine andauernd hohe Rechenleistung benötigt wird und daraus ein hoher Strombedarf resultiert. Bei dieser Verwirklichung des Verfahrens besteht noch großes Potenzial der Strombedarfsoptimierung. Nach entsprechender Filterung erfolgt gegebenenfalls ein Triggersignal TRS am Ausgang des Mikrocontrollers, um die Funktion AR und/oder AP zu aktivieren.

Ein zweites Ausführungsbeispiel eines einen Teil des Verfahrens verwirklichenden Elements für die zweite Ebene E2 und die dritte Ebene E3 ist nachfolgend anhand Fig. 10 näher erläutert.

Bei dem in Fig. 10 dargestellten Element handelt es sich um eine Erweiterung des voranstehend unter Bezugnahme auf Fig. 9 beschriebenen Ausführungsbeispiels zu einem Aufbau mit Analog-Digital-Converter ADC und Timer TM. Eine ebenfalls in der Peripherie des Mikrocontrollers vorhandene Timer TM Funktion startet zu äquidistanten Zeitpunkten einen Analog-Digital-Converter ADC, in Fig. 10 angedeutet durch einen Pfeil StADC. Bei geeigneter Einstellung des Timers TM sind weniger Sensorwerte vom Mikrocontroller auszuwerten, wodurch dieser tendenziell mehr im Ruhezustand ist und somit der Stromverbrauch verringert werden kann.

Ein drittes Ausführungsbeispiel eines einen Teil des Verfahrens verwirklichenden Elements für die zweite Ebene E2 und die dritte Ebene E3 ist nachfolgend anhand Fig. 11 näher erläutert.

Bei dem in Fig. 11 dargestellten Element handelt es sich um eine Erweiterung des voranstehend unter Bezugnahme auf Fig. 10 beschriebenen Ausführungsbeispiels zu einem Aufbau mit Analog-Digital-Conversion-Computation ADCC Threshold Compare TC und Timer TM. Die im in Fig. 11 dargestellten Ausführungsbeispiel vorgesehene Analog-Digital-Conversion-Computation ADCC stellt eine erweiterte Analog-Digital-Conversion ADC Funktion dar. Diese Computation Funktion ermöglicht den Vergleich von beispielsweise dem aktuell gewandelten Sensorwert mit einem zuvor parametrisierten Schwellenwert. In Fig. 11 ist dieser Vergleich durch einen Pfeil Threshold Compare TC angedeutet. Liegt der Sensorwert beispielsweise unterhalb des Schwellenwerts, so kann ein Interrupt ausgelöst werden, um den Prozessor aus dem Ruhezustand zu holen. In diesem Fall kann garantiert werden, dass lediglich bei geringer Umgebungshelligkeit, wie etwa bei Dämmerung oder Nacht, der Mikrocontroller die Sensorwerte weiter auswertet. Am Tag würde der Mikrocontroller dauerhaft im Ruhezustand bleiben und somit stromsparend agieren. Im Mittel kann dadurch die Stromaufnahme deutlich verringert werden, da bereits viele Sensorwerte innerhalb der ADCC Peripherie gefiltert werden.

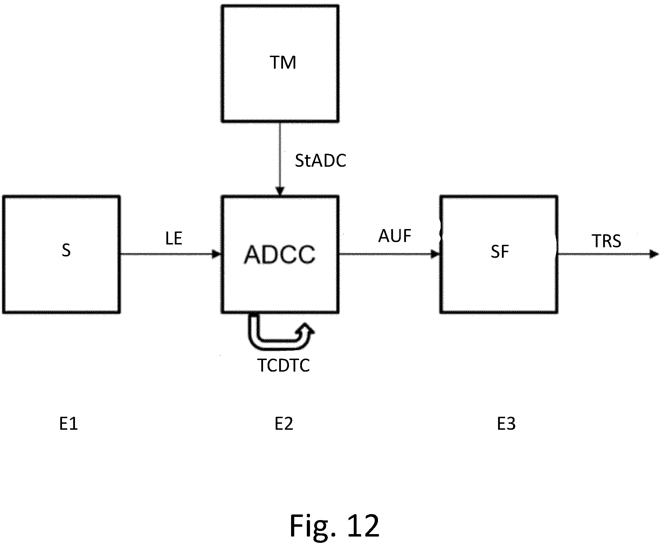

Ein viertes Ausführungsbeispiel eines einen Teil des Verfahrens verwirklichenden Elements für die zweite Ebene E2 und die dritte Ebene E3 ist nachfolgend anhand Fig. 12 näher erläutert.

Bei dem in Fig. 12 dargestellten Element handelt es sich um eine Erweiterung des voranstehend unter Bezugnahme auf Fig. 11 beschriebenen Ausführungsbeispiels zu einem Aufbau mit Analog-Digital-Conversion-Computation ADCC Threshold Compare mit Derivate Threshold Compare TCDTC und Timer TM. Neben dem Schwellwertvergleich mit dem Sensorwert für die Tag-/Nacht-Bestimmung kann ebenfalls bei einer positiven oder negativen Änderungsrate des Sensorwertes ein Interrupt ausgelöst werden, um den Mikrocontroller aus dem Ruhezustand zu holen. Das ist in einem Fall besonders vorteilhaft, da bei dieser Ausgestaltung das eine vorteilhafte Weiterbildung des Verfahrens ganz oder zum Teil verwirklichende Element auf eine ansteigende und somit positive Änderungsrate des Sensorwertes analog zu dessen Beleuchtungsstärke triggern soll. Das Element kann so aufgebaut werden, dass beispielsweise nur bei Nacht und nur bei positiver Änderungsrate der Mikrocontroller aus dem Ruhezustand geholt wird. Anschließend kann mittels eines Software-Algorithmus eine weitere Filterung erfolgen. Dies ist jedoch nur noch bei für das Verfahren wahrscheinlich relevanten Eingangssignalen notwendig. Mit diesem Verfahren kann ein geringer Stromverbrauch erreicht werden.

Ein fünftes Ausführungsbeispiel eines einen Teil des Verfahrens verwirklichenden Elements für die zweite Ebene E2 und die dritte Ebene E3 ist nachfolgend anhand Fig. 13 näher erläutert.

Bei dem in Fig. 13 dargestellten Aufbau handelt es sich um eine Anpassung des zuvor unter Bezugnahme auf Fig. 12 beschriebenen Aufbaus zu einem Element mit Analog-Digital-Conversion-Computation ADCC, Derivate Threshold Compare DTC, Timer TM, Komparator K und/oder Operationsverstärker OPA, sowie Digital Analog Converter DAC. Aktuelle Mikrocontroller besitzen meist nur eine Analog-Digital-Conversion-Computation ADCC Einheit, deshalb kann nicht gleichzeitig ein Vergleich von Schwellenwert zu aktuellem Sensorwert und Schwellenwert zu Änderungsrate vorgenommen werden. Abhilfe schafft der in Fig. 13 gezeigte Aufbau. Das Sensorsignal wird gleichzeitig auf einen Komparatoreingang des Mikrocontrollers, alternativ auf einen Eingang eines in der Mikrocontroller Peripherie angeordneten Komparators K oder eines in der Mikrocontroller Peripherie angeordneten Operationsverstärkers OPA gegeben. Der Komparator K und/oder der Operationsverstärker OPA vergleicht dann den Sensorwert mit einem variabel definierten, intern erzeugten Schwellenwert aus der Digital Analog Converter DAC Peripherie. Mit diesem Vorgehen kann ebenfalls ein Tag/Nacht-Vergleich stattfinden. Der Ausgang des Komparators K und/oder des Operationsverstärkers OPA hält diese Information für die Software bereit.

Nach wie vor findet in der ADCC Peripherie der Vergleich der Änderungsrate mit einem Schwellenwert statt. Bei positiven Vergleich wird ein Interrupt erzeugt und der Mikrocontroller aus dem Ruhezustand geholt. Somit hat der Mikrocontroller Information über eine steigende Beleuchtungsstärke und, ob es Tag oder Nacht ist. Mithilfe eines weiteren Softwarefilters SF, die beispielsweise wie in Fig. 7 und Fig. 8 dargestellt arbeiten, können diese Signale entsprechend weiter verarbeitet werden.

Dabei zeigt Fig. 7 den zeitlichen Verlauf der Funktionsweise eines zuvor erwähnten weiteren Softwarefilters SF gemäß eines ersten Ausführungsbeispiels als einer möglichen Aus gestaltung einer verfahrensgemäßen Filterung in der dritten Ebene E3. Eine Zählvariable N wird erhöht, sofern ein entsprechendes Sensorsignal anliegt. In diesem Beispiel bei einer Änderungsrate der Beleuchtungsstärke größer gleich 1,3 Ix/s. Die Zählvariable muss einen einstellbaren Schwellenwert überschreiten, damit ein Triggersignal von beispielsweise 3 s erzeugt wird. Dieses Verfahren weißt ein Tiefpassverhalten auf. Im Anschluss wird die Zählvariable zurückgesetzt.

Fig. 8 zeigt demgegenüber den zeitlichen Verlauf der Funktionsweise eines alternativen zuvor zu Fig. 13 erwähnten weiteren Softwarefilters SF entsprechend einem zweiten Ausführungsbeispiel als einer möglichen Ausgestaltung einer verfahrensgemäßen Filterung in der dritten Ebene E3. In diesem Fall wird jedoch im Unterschied zum zeitlichen Verlauf gemäß dem Ausführungsbeispiel in Fig. 7 nach einer Zeitdauer t_{Timeout}, in welcher kein Anstieg der Zählvariablen zu verzeichnen ist, diese wieder zurückgesetzt. Somit wird ein unerwünschtes kumulieren der Zählvariablen über einen längeren Zeitraum vermieden.

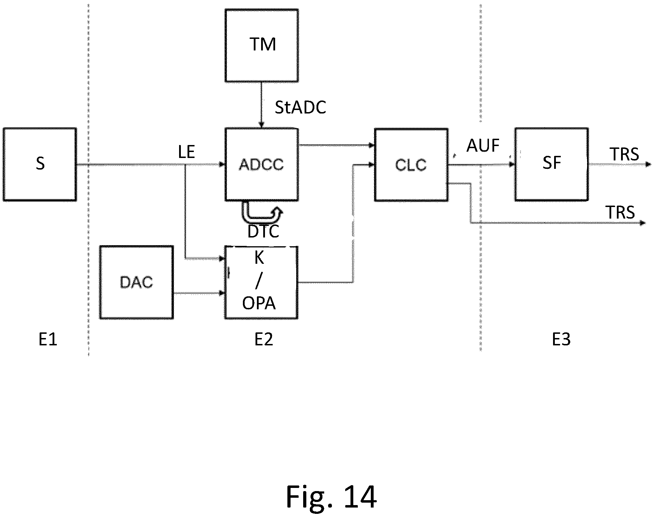

Ein sechstes Ausführungsbeispiel eines einen Teil des Verfahrens verwirklichenden Elements für die zweite Ebene E2 und die dritte Ebene E3 ist nachfolgend anhand Fig. 14 näher erläutert.

Bei dem in Fig. 14 dargestellten Aufbau handelt es sich um eine Erweiterung des zuvor unter Bezugnahme auf Fig. 13 beschriebenen Aufbaus zu einem Element mit Analog-Digital-Conversion-Computation ADCC, Derivate Threshold Compare DTC, Timer TM, Komparator K und/oder Operationsverstärker OPA, Digital Analog Converter DAC und Configurable Logic Cell CLC.

Bei diesem Element werden die Signale der ADCC und die Komparator K und/oder Operationsverstärker OPA Einheit in einer sogenannten Configurable Logic Cell CLC verarbeitet. Die Configurable Logic Cell CLC ist ebenfalls in der Mikrocontroller Peripherie angeordnet und bietet die Möglichkeit, logische Verknüpfungen wie AND und/oder OR, aber auch diverse Flip Flops zu verwirklichen. Die Configurable Logic Cell CLC besitzt dann die Möglichkeit, nur bei entsprechendem Eingangssignal den Prozessor aus dem Ruhezustand zu wecken und ein Softwarefilter SF aufzurufen. Alternativ ist denkbar, das Ausgangssignal der Configurable Logic Cell CLC direkt als Triggersignal TRS - beispielsweise auf einen Ausgang des Mikrocontrollers - zu legen, um damit die Funktion AR und/oder AP direkt zu aktivieren. An dieser Stelle kann auch eine Timer Funktion von der Configurable Logic Cell CLC aktiviert werden, welche angibt, wie lange der Trigger beziehungsweise das Triggersignal TRS für die Funktion AR und/oder AP anliegt.

Je nachdem, welche Filterungen bereits in der Mikrocontroller Peripherie vorgenommen wurden, fällt das Softwarefilter SF in der dritten Ebene E3 mehr oder weniger umfangreich aus.

Für den Fall, dass die Peripherie wie in Zusammenhang mit Fig. 12 erläutert bereits eine Tag/Nacht Schwellenprüfung und eine Prüfung der Änderungsrate durchführt, dann wird der Mikrocontroller erst aus dem Ruhezustand geholt, wenn es Nacht ist und eine positive Änderungsrate der Beleuchtungsstärke am Sensor S vorliegt. In diesem Fall würde ein Tiefpass in Software aufgebaut, beispielsweise wie in Fig. 7 dargestellt. Dieser garantiert, dass die positive Beleuchtungsstärkeänderung auch einen definierten Zeitraum lang anliegt. Das Tiefpassverhalten ist beispielsweise vorteilhaft, um nicht zu sensibel auf jegliche kurzzeitige Änderungen der Beleuchtungsstärke auf den Sensor S zu reagieren. In dem in Fig. 7 beispielhaft gezeigten Fall muss vier Mal der Zustand Nacht und positive Beleuchtungsstärkeänderung vorliegen, bevor ein Triggersignal TRS ausgelöst und die Funktion AR und/oder AP aktiviert wird. Danach wird die Zählvariable zurückgesetzt.

Zu beachten ist dabei, dass das Erhöhen der Zählvariablen innerhalb eines bestimmten Zeitraumes erfolgen muss, um ein kumulieren über einen längeren Zeitraum zu vermeiden. Dieser Umstand ist in Fig. 8 gezeigt. Erfolgt innerhalb eines Zeitraumes t_{Timeout} keine Erhöhung der Zählvariablen, wird diese zurückgesetzt.

Erfolgt in der Mikrocontroller Peripherie keinerlei Filterung, muss diese in Software umgesetzt werden. Dabei können die Sensorwerte zwischengespeichert werden. Liegen die letzten Werte oberhalb der Tagschwelle, dann kann die Information Tag/Nacht erzeugt werden. Außerdem kann die Änderungsrate der Beleuchtungsstärke über die Differenz vergangener Werte berechnet werden. Nach entsprechender Softwarefilterung kann ein Triggersignal über einen Mikrocontroller Pin und mittels Timer Funktion für eine entsprechende Zeit ausgegeben werden.

Wichtig ist an dieser Stelle hervorzuheben, dass eine Filterung Tag/Nacht in Software generell möglich ist, jedoch aus Stromspargründen möglichst vermieden werden sollte.

Anpassungen sind leicht umsetzbar, insbesondere da die Schwellwerte bei Softwarelösungen - im Vergleich zu Hardwarelösungen - einfach im Quellcode angepasst werden können. Daher sind derartige Lösungen änderungsfreundlich.

Eine alternative Ausgestaltung eines ein Verfahren zur Aktivierung einer Lichtfunktion an einem am ruhenden Verkehr teilnehmenden Fahrzeug ganz oder zum Teil verwirklichenden Elements ist in Fig. 15 dargestellt.

Bei der in Fig. 15 dargestellten Ausgestaltung handelt es sich alternativ zu den voranstehend beschriebenen Ausführungsbeispielen um ein rein analoges Konzept. Dabei wird kein Prozessor wie beispielsweise ein Mikrocontroller benötigt, sondern die Schaltung mit diskreten Bauelementen oder Integrierten Schaltkreisen IC verwirklicht. Dabei wird beispielsweise das Sensorsignal auf verschiedene ICs gleichzeitig gegeben. Beispielsweise kann ein Komparator K die Information von Tag/Nacht erzeugen, indem das Sensorsignal mit einem einer Tagschwelle entsprechenden Schwellenwert verglichen wird. Anschließend sorgt ein erstes Verzögerungsglied V1 dafür, dass die Tagschwelle eine gewisse Zeit lang überschritten werden muss, bevor in den Tag-Modus übergegangen wird. In einer anschließenden Logikgruppe Logik führt ein Tagsignal dazu, das Triggersignal TRS zu unterbinden, um die Funktion AR und/oder AP zu deaktivieren. Der Tag-Modus kann auch eintreten, wenn ein statisches System vorliegt, indem beispielsweise ein Fahrzeug mit seinem Scheinwerfer hinter dem Fahrzeug mit Funktion AR und/oder AP für längere Zeit hält. In diesem Fall kann die Funktion AR und/oder AP nach einer bestimmten Zeit deaktiviert werden, da das Fahrzeug bereits erkennbar gemacht wurde.

Eine erste Hochpass-Filtergruppe H1 erzeugt eine Information, ob eine ansteigende Beleuchtungsstärke am Sensor S vorliegt. Sofern die Änderung der Beleuchtungsstärke und somit des Sensorsignales einen einstellbaren Schwellenwert überschreitet, wird ein Signal am Ausgang der Hochpass-Filtergruppe H1 ausgegeben, von wo aus es zu einem zweiten Verzögerungsglied V2 weitergeleitet wird. Das zweite Verzögerungsglied V2 sorgt dafür, dass diese Änderung der Beleuchtungsstärke für eine gewisse Zeit lang anliegen muss, bevor schlussendlich das zweite Verzögerungsglied V2 das Signal an die Logikgruppe Logik weiterleitet.

Eine zweite Hochpass-Filtergruppe H2 ist optional zusätzlich integrierbar. Diese soll folgenden Fall auswerten: Falls die Beleuchtungsstärke am Sensor S sprunghaft ansteigt, kann der Sensorwert rasch einen Maximalwert erreichen. Somit würde über den ersten Hochpass H1 keine Triggerung stattfinden, da nur über eine kurze Zeitdauer das Sensorsignal ansteigen würde. Der zweite Hochpass H2 ist so ausgelegt, dass er auf sehr hohe Änderungen der Beleuchtungsstärke und somit des Sensorsignales ein Ausgangssignal erzeugt. Dieses Signal wird in der Logikgruppe Logik entsprechend verarbeitet, um in diesem Fall mit Hilfe einer oder-Verknüpfung (OR) ein Triggersignal TRS zu erzeugen.

Ein optionales, externes Ein- / Aus-Signal ON/OFF kann das Triggersignal TRS unterbinden oder freigeben.

Bei diesem Konzept ist darauf zu achten, dass die vielen Bauteile den Strombedarf in Summe nicht zu hoch treiben. Auch bedeutet der Einsatz von vielen Bauteilen gleichzeitig einen erhöhten Platzbedarf auf einem Leiterbahnträger und eine Kostensteigerung des hierdurch verwirklichten Elements.

Wichtig ist hervorzuheben, dass es bei einem rein analogen Schaltungsaufbau gemäß Fig. 15 zu Einschränkungen insbesondere bei der robusten Auslegung, wie etwa hinsichtlich eines sicheren Erkennens von und Reagierens auf Eingangssignale kommen kann. Ferner ist die Änderungsfreundlichkeit eines analogen Schaltungsaufbaus eingeschränkt, entsprechend der Höhe des zu betreibenden Aufwands bei einer Änderung der Anforderungen an das Verfahren. Hierdurch und durch den rein analogen Aufbau kann es zu Mehrkosten des Elements kommen.

Gemäß einer alternativen oder zusätzlichen Verwirklichung des Verfahrens können eine oder mehrere Kameras als Sensor oder als Sensoren verwendet werden, die zunehmend in Fahrzeugen Einzug finden. Eine solche Kamera kann ebenfalls die Umgebung beobachten, das Bild mittels Software auswerten und bei Annäherung eines fremden Fahrzeuges das Parklicht des eigenen Fahrzeugs aktivieren. Das kann beispielsweise über das zentrale Fahrzeugsteuergerät erfolgen. Die Stromaufnahme einer solchen Verwirklichung ist allerdings deutlich höher und die Systemkosten ebenfalls stark erhöht.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Verfahren zur Aktivierung einer Lichtfunktion an einem am ruhenden Verkehr teilnehmenden Fahrzeug, welche Aktivierung eine softwarebasierte Auswertung verschiedener sensorisch erfassbarer Randbedingungen voraussetzt, wobei das Verfahren vorsieht, ein Ausgangssignal eines Sensors dauerhaft oder in wiederkehrenden Zeitabschnitten zu überwachen und mit einem Schwellenwert zu vergleichen und nur bei einer Überschreitung des Schwellenwerts diesen einen Sensorsignals einen Entscheidungszyklus unter Heranziehung der softwarebasierten Auswertung zu starten, an dessen Ende eine Entscheidung stattfindet, ob die Lichtfunktion eingeschaltet wird, oder ausgeschaltet bleibt, so dass die softwarebasierte Auswertung nur dann ausgeführt wird, wenn eine Aktivierung der Lichtfunktion zumindest wahrscheinlich ist, und wobei die softwarebasierte Auswertung am Ende des Entscheidungszyklusses wieder abgeschaltet wird und so lange abgeschaltet bleibt, bis wieder eine Überschreitung des Schwellenwerts durch den Sensorwert vorliegt.

2. Verfahren nach Anspruch 1, wobei die Aktivierung der Lichtfunktion nach einer vorgebbaren Zeitspanne wieder rückgängig gemacht wird.

3. Verfahren nach Anspruch 1 oder 2, wobei es sich bei der Lichtfunktion um eine aktive Rückstrahllichtfunktion und/oder um eine aktive Parklichtfunktion handelt.

4. Verfahren nach Anspruch 1, 2 oder 3, wobei das Ausgangssignal des Sensors im Falle eines Starts eines Entscheidungszyklusses selbst eine eine Randbedingung abbildende Eingangsgröße für den Entscheidungszyklus bildet.

5. Verfahren nach einem der Ansprüche 1 bis 4, wobei der Sensor eine Größe erfasst, deren Vorhandensein Voraussetzung ist für eine am Ende des Entscheidungszyklus stehende Entscheidung zur Aktivierung der Lichtfunktion ist.

6. Verfahren nach einem der voranstehenden Ansprüche, wobei es eine Filterung und Auswertung von Eingangsgrößen in Form von in Sensorwerten resultierenden Einwirkungen von Umwelteinflüssen auf einen oder mehrere Sensoren auf mehreren Ebenen (E1, E2, E3) vorsieht, um zu einer ein valides Ausgangssignal des Entscheidungszyklus bildenden Entscheidung zu gelangen, ob die Lichtfunktion aktiviert wird, oder nicht.

7. Verfahren nach einem der voranstehenden Ansprüche, wobei die Aktivierung der Lichtfunktion in einzelnen Segmente und/oder Raumwinkelbereichen erfolgt.

8. Verfahren nach einem der voranstehenden Ansprüche, wobei eine Aktivierung der Lichtfunktion an dem am ruhenden Verkehr teilnehmenden Fahrzeug nur bei Nacht erfolgt.

9. Element zur zumindest teilweisen Ausführung eines Verfahrens nach einem der voranstehenden Ansprüche, umfassend:
- mindestens einen Sensor zur Erfassung einer Einwirkung eines Umwelteinflusses auf den Sensor,
- Mittel zum Vergleich eines der Einwirkung des Umwelteinflusses auf den Sensor proportionalen Ausgangssignals des Sensors mit einem Schwellenwert,
- Mittel zur Aufweckung einer softwarebasierten Auswertung eines oder mehrerer Sensorwerte zum Erhalt eines Entscheidungszyklusses, an dessen Ende eine Entscheidung stattfindet, ob eine Lichtfunktion eingeschaltet wird, oder ausgeschaltet bleibt, welche Mittel zur Aufweckung nur dann betätigt werden, wenn die Mittel zum Vergleich einen Sensorwert höher als der Schwellenwert ermittelt haben, und
- Mittel zur Durchführung der softwarebasierten Auswertung, sowie
- Mittel zur Aktivierung der Lichtfunktion, wenn am Ende der softwarebasierten Auswertung eine Entscheidung zum Einschalten der Lichtfunktion fällt.

10. Element nach Anspruch 9, wobei es weitere Mittel umfasst, welche die Mittel zum Vergleich nur dann aktivieren, wenn ein Einschalten der Lichtfunktion in Frage kommt.
